# EUROPEAN PATENT APPLICATION

(11) **EP 4 354 302 A1**
(43) Date of publication of application: **17.04.2024**
(21) Application number: 23196882.7
(22) Date of filing: 12.09.2023
(51) Int. Cl.: G06F 11/30, G06F 11/34

(54) **SYSTEMS AND METHODS OF CALCULATING THRESHOLDS FOR KEY PERFORMANCE METRICS**

(30) Priority: 15.09.2022 US 202217945658
(71) Applicant: Citrix Systems Inc., Fort Lauderdale, FL 33309 (US)
(72) Inventor: GARG, Mukesh, Fort Lauderdale, 33309 (US); SANDHU, Vikramjeet Singh, Fort Lauderdale, 33309 (US); ROY, Vinay George, Fort Lauderdale, 33309 (US); DUBEY, Naman, Fort Lauderdale, 33309 (US); RAGHUVEER, Vivek Koni, Fort Lauderdale, 33309 (US)
(74) Representative: Murgitroyd & Company

(57) **Abstract**

Systems and methods for key performance benchmarking may include receiving for a plurality of client devices of a tenant, a duration for performing a plurality of actions to log into a resource. The systems and methods can include determining metrics for each action of the plurality of actions. The systems and methods can include generating, by the one or more processors, one or more recommendations corresponding to at least one action of the plurality of actions, to reduce the duration to log into the resource.

## Description

### FIELD OF THE DISCLOSURE

The present application generally relates to key performance metric benchmarking. In particular, the present application relates to systems and methods for calculating thresholds for key performance metrics, including for different business verticals across tenants, and generating intelligent suggestions to improve the key performance indicators.

### BACKGROUND

Resource performance can vary based on various actions and parameters of an resource (e.g., application), users, and application host. One or more parameters of a client device, host device, or network interface such as configuration settings, CPU cores available, or network bandwidth of various devices can impact their performance. The performance can impact a metric for a resource, such as a logon time.

### BRIEF SUMMARY

This summary is provided to introduce a selection of concepts in a simplified form that are further described below in the Detailed Description. This summary is not intended to identify key features or essential features, nor is it intended to limit the scope of the claims included herewith.

In many computing environments, performance benchmarks can rely on individual experience, consultants and subject matter experts for performing benchmarking. The manual process involved for benchmarking can be expensive, time consuming and prone to human error. Although some approaches can rely on other data, the data may be limited based on access rights or availability of such data. Thus, it may be advantageous to benchmark performance relative to peer organizations. For example, one or more key performance metric (KPM), which are also referred to as key performance indicators (KPI) can include logon duration. Logon duration includes time taken for a user to be logged into a resource and can include constituent actions. A constituent action is a subdivision of an action, the performance of which may correlate to an install configuration. For example, a first constituent action (e.g., parsing a profile for selected data) can be processor bound, a second constituent action (e.g., retrieving files over a network) can be network bandwidth bound, and a third constituent action (e.g., a logon script) can include a delay established for debugging purposes, and so forth. A change in performance of a constituent action can have different or multiple causes. For example, an increase of memory bandwidth or a removal of a delay can each increase performance, depending on an install configuration. Each action can have a performance, variance, or other metric associated therewith. However, comparisons between or across enterprises can be challenging. Thus, systems and methods described herein may be configured to determine and compare data across organizations to determine relative performance. The systems and methods can expose performance metrics without exposing access to at least some underlying data to generate the metrics.

Various groups, enterprises, resource hosts, or other aggregations of users (e.g., tenants) can be clustered into peer groups. For example, a large financial enterprise can be clustered with a peer group including other large financial groups, and a local travel agency can be clustered with a peer group including other local travel agencies or other similar small enterprises or agencies. The systems and methods disclosed herein can analyze tenant KPIs such as login performance wither respect to a peer group. The analysis can determine an overall performance or a performance of various constituent actions of a process (e.g., of a logon process). The overall performance or the performance of each constituent action can be analyzed across the peer group. For example, a tenant having an overall performance metric exceeding a peer group can have one or more constituent portions having lesser performance than a peer group; the improvement of which may increase an overall performance.

One or more machine learning models can define the tenant groups, analyze data of the tenants to identify KPI, or present KPIs to the tenants, such as via a graphical user interface. Clustering the tenants can be based on defined parameters such as tenant domain, number of users, number of applications, number of users signing in in a day, specification or usage of virtual applications or hosts thereof (e.g., available or utilized hardware resources), number of sessions in a day, ratios of users to hosts, number of applications used, etc. The tenant parameters can include averages, standard deviations, maximums, minimums, and the like. The clustering can be performed by or with clustering techniques such as density-based spatial clustering of applications with noise (DBSCAN), hierarchical versions thereof (HDBSCAN), or K-means.
Tenants can select options for the clustering. Tenants can elect to increase, decrease, or adjust a dimension or location of a cluster. For example, the tenant can modify a local radius, ε, of a DBSCAN method to adjust a cluster size, or adjust a parameter such as employee size (e.g., for a small business to benchmark against a larger organization, or evaluate a performance or a proposed additional virtual application).

Various performance parameters (e.g., a login performance of hosted applications) can vary between applications, servers, time, client devices, and so on. Thus, performance can be evaluated based on the various applications, servers, time, client devices, and so on. Comparisons or clusters can be based on tenants having similarities between the various applications, servers, time, client devices, and so on (e.g., on a per-application basis or across multiple applications common between tenants). The KPI can be based on an average (e.g., mean or median) performance based on a defined time interval such as a month, week, year, or hour. The comparison can be presented to the user or further processed. A percentile or a performance metric can be presented to a tenant with reference to a peer group. For example, a login time can be displayed as a percentile, or a time for the login action or constituent actions thereof.

A constituent action having a high absolute time may represent relatively low opportunity for performance. For example, if a constituent action has a time of 10 seconds, and is best in class compared to peers, and another constituent action has a time of 4 seconds, but strongly lags peers, the 4 second action can represent a greater opportunity for improvement. Moreover, some constituent actions can be associated with relatively high cost options (e.g., replacement of client devices) while other constituent actions can be associated with relatively low cost options (e.g., configuration changes). Thus the presentation of the actions and the metrics at a constituent action level can be advantageous.

A machine learning model can identify the parameters associated with (e.g., causal of) the performance variance between or within tenants. For example, an associational or causal relationship between a predefined set of features and performance of the various constituent actions can be determined. The predefined set of features can include configuration parameters, memory available, file size, CPU parameters or availability (e.g., of a client device, a resource host or intermediary, or another device). A model can be trained based on the predefined set of parameters. Important parameters (e.g., associated with performance variations of an action including a constituent action) can be defined. For example, a SHapley Additive explanation (SHAP) model can be applied to various parameters to determine a contribution thereof, for one or more constituent actions. Classification models such as random forest or decision tree can be used to classify a tenant or portion thereof, the performance can be sorted based on the parameters or the parameters can be sorted based on the performance (e.g., to determine features correlated with performance variance).

An aspect of this disclosure provides a method. The method can include receiving, by one or more processors, for client devices of a tenant, a duration for performing actions to log into a resource. The method can include determining, by the one or more processors, metrics for each action of the plurality of actions. The method can include generating, by the one or more processors, one or more recommendations corresponding to at least one action of the plurality of actions, to reduce the duration to log into the resource.

In some embodiments, wherein the plurality of actions include at least one of brokering a session to the resource, a virtual machine start-up, establishing a connection between the respective client device and the virtual machine, application of a global policy, execution of log-on scripts, loading a profile, or handoff.

In some embodiments, the plurality of client devices for the tenant include a first plurality of client devices for a first tenant. The method can include receiving, by the one or more processors, for a second plurality of clients for second tenants, a second duration for performing the plurality of actions to log into the resource. The method can include clustering, by the one or more processors, the first tenant and the plurality of second tenants into clusters according to one or more parameters of the first tenant and the plurality of second tenants. The method can include comparing, by the one or more processors, the metrics identified for the first tenant to metrics for each action of the plurality of actions of a subset of the plurality of second tenants, the first tenant clustered with the subset of the plurality of second tenants.

In some embodiments, the method can include generating, by the one or more processors, a user interface for display on a device associated with the first tenant, the user interface including one or more graphical representations corresponding to the plurality of actions based on the comparison.

In some embodiment, the method can include generating the one or more recommendations corresponding to the at least one action is based on the comparison of the metrics for the first tenant to the metrics for each action of the subset of the plurality of second tenants.

In some embodiments, the one or more parameters include at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

In some embodiments, the method can include applying, by the one or more processors, the metrics for each action to a machine learning model trained to generate the one or more recommendations based on training metrics and corresponding recommendations.

In some embodiments, generating the one or more recommendations is based on a comparison of an average of the metrics corresponding to the tenant for the plurality of actions over a first time period to metrics corresponding to the tenant for the plurality of actions over a second time period.

In some embodiments, receiving the duration for performing the plurality of actions to log into the resource includes receiving, by the one or more processors, from a respective a virtual delivery agent of each client device of the plurality of client devices, the duration for performing each action of the plurality of actions to log into the resource via the virtual delivery agent.

Another aspect of this disclosure provides a system. The system can include one or more processors. The processors can be configured to receive, for client devices of a tenant, a duration for performing actions to log into a resource. The processors can be configured to determine metrics for each action of the plurality of actions. The processors can be configured to generate one or more recommendations corresponding to at least one action of the plurality of actions, to reduce the duration to log into the resource.

In some embodiments, the plurality of actions can include at least one of brokering a session to the resource, a virtual machine start-up, establishing a connection between the respective client device and the virtual machine, application of a global policy, execution of log-on scripts, loading a profile, or handoff.

In some embodiments, the plurality of client devices for the tenant includes a first plurality of client devices for a first tenant. The one or more processors can be further configured to receive, for a second plurality of clients for second tenants, a second duration for performing the plurality of actions to log into the resource. The one or more processors can be further configured to cluster the first tenant and the plurality of second tenants into clusters according to one or more parameters of the first tenant and the plurality of second tenants. The one or more processors can be further configured to compare the metrics identified for the first tenant to metrics for each action of the plurality of actions of a subset of the plurality of second tenants, the first tenant clustered with the subset of the plurality of second tenants.

In some embodiments, the one or more processors can be configured to generate a user interface for display on a device associated with the first tenant, the user interface including one or more graphical representations corresponding to the plurality of actions based on the comparison.

In some embodiments, generating the one or more recommendations corresponding to the at least one action is based on the comparison of the metrics for the first tenant to the metrics for each action of the subset of the plurality of second tenants.

In some embodiments, the one or more parameters include at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

In some embodiments, the one or more processors are configured to apply the metrics for each action to a machine learning model trained to generate the one or more recommendations based on training metrics and corresponding recommendations.

In some embodiments, generating the one or more recommendations is based on a comparison of an average of the metrics corresponding to the tenant for the plurality of actions over a first time period to metrics corresponding to the tenant for the plurality of actions over a second time period.

In some embodiments, receiving the duration for performing the plurality of actions to log into the resource can include receiving, from a respective a virtual delivery agent of each client device of the plurality of client devices, the duration for performing each action of the plurality of actions to log into the resource via the virtual delivery agent.

Another aspect of this disclosure provides a non-transitory computer readable medium storing instructions that, when executed by one or more processors, cause the one or more processors to receive, for client devices of a tenant, a duration for performing actions to log into a resource. The computer readable medium can store instructions that cause the one or more processors to determine metrics for each action of the plurality of actions. The computer readable medium can store instructions that cause the one or more processors to generate one or more recommendations corresponding to at least one action of the plurality of actions, to reduce the duration to log into the resource.

In some embodiments, the plurality of client devices for the tenant includes a first plurality of client devices for a first tenant, and wherein the instructions can cause the one or more processors to receive, for a second plurality of clients for second tenants, a second duration for performing the plurality of actions to log into the resource. The instructions can cause the one or more processors to cluster the first tenant and the plurality of second tenants into clusters according to one or more parameters of the first tenant and the plurality of second tenants. The instructions can cause the one or more processors to compare the metrics identified for the first tenant to metrics for each action of the plurality of actions of a subset of the plurality of second tenants, the first tenant clustered with the subset of the plurality of second tenants.

### BRIEF DESCRIPTION OF THE DRAWING FIGURES

Objects, aspects, features, and advantages of embodiments disclosed herein will become more fully apparent from the following detailed description, the appended claims, and the accompanying drawing figures in which like reference numerals identify similar or identical elements. Reference numerals that are introduced in the specification in association with a drawing figure may be repeated in one or more subsequent figures without additional description in the specification in order to provide context for other features, and not every element may be labeled in every figure. The drawing figures are not necessarily to scale, emphasis instead being placed upon illustrating embodiments, principles, and concepts. The drawings are not intended to limit the scope of the claims included herewith.
FIG. 1A is a block diagram of a network computing system, in accordance with an illustrative embodiment;
FIG. 1B is a block diagram of a network computing system for delivering a computing environment from a server to a client via an appliance, in accordance with an illustrative embodiment;
FIG. 1C is a block diagram of a computing device, in accordance with an illustrative embodiment;
FIG. 2 is a block diagram of an appliance for processing communications between a client and a server, in accordance with an illustrative embodiment;
FIG. 3 is a block diagram of a virtualization environment, in accordance with an illustrative embodiment;
FIG. 4 is a block diagram of a cluster system, in accordance with an illustrative embodiment;
FIG. 5 is a block diagram of an aggregate data processing system interfacing with one or more tenant data processing systems, in accordance with an illustrative embodiment;
FIG. 6 is a two dimensional representation of a multi-dimensional clustering of a performance of multiple tenant data processing systems 150, in accordance with an illustrative embodiment;
FIG. 7 is a depiction of key performance metrics of tenants, in accordance with an illustrative embodiment;
FIG. 8 is a flow diagram of a method to benchmark key performance indicators, in accordance with an illustrative embodiment;
FIG. 9 is flow diagram of a method to generate recommendations to improve a performance of a tenant data processing system, in accordance with an illustrative embodiment;
FIG. 10 is a block diagram of an example system using supervised learning, in accordance with an illustrative embodiment.
FIG. 11 is a block diagram of a simplified neural network model, in accordance with an illustrative embodiment.

The features and advantages of the present solution will become more apparent from the detailed description set forth below when taken in conjunction with the drawings, in which like reference characters identify corresponding elements throughout. In the drawings, like reference numbers generally indicate identical, functionally similar, and/or structurally similar elements.

### DETAILED DESCRIPTION

For purposes of reading the description of the various embodiments below, the following descriptions of the sections of the specification and their respective contents may be helpful:
Section A describes a network environment and computing environment which may be useful for practicing embodiments described herein;
Section B describes embodiments of systems and methods for delivering a computing environment to a remote user;
Section C describes embodiments of systems and methods for virtualizing an application delivery controller;
Section D describes embodiments of systems and methods for providing a clustered appliance architecture environment;
Section E describes systems and methods for key performance metric benchmarking.
Section F describes embodiments of systems and methods for key performance metric benchmarking.

### A. Network and Computing Environment

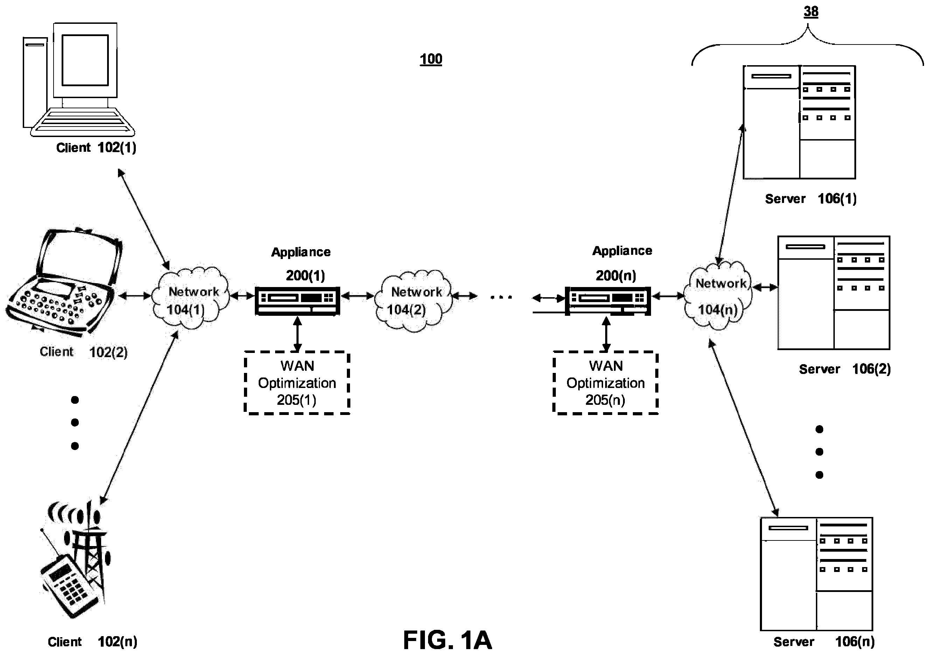

Referring to FIG. 1A, an illustrative network environment 100 is depicted. Network environment 100 may include one or more clients 102(1)-102(n) (also generally referred to as local machine(s) 102 or client(s) 102) in communication with one or more servers 106(1)-106(n) (also generally referred to as remote machine(s) 106 or server(s) 106) via one or more networks 104(1)-104n (generally referred to as network(s) 104). In some embodiments, a client 102 may communicate with a server 106 via one or more appliances 200(1)-200n (generally referred to as appliance(s) 200 or gateway(s) 200).

Although the embodiment shown in FIG. 1A shows one or more networks 104 between clients 102 and servers 106, in other embodiments, clients 102 and servers 106 may be on the same network 104. The various networks 104 may be the same type of network or different types of networks. For example, in some embodiments, network 104(1) may be a private network such as a local area network (LAN) or a company Intranet, while network 104(2) and/or network 104(n) may be a public network, such as a wide area network (WAN) or the Internet. In other embodiments, both network 104(1) and network 104(n) may be private networks. Networks 104 may employ one or more types of physical networks and/or network topologies, such as wired and/or wireless networks, and may employ one or more communication transport protocols, such as transmission control protocol (TCP), internet protocol (IP), user datagram protocol (UDP) or other similar protocols.

As shown in FIG. 1A, one or more appliances 200 may be located at various points or in various communication paths of network environment 100. For example, appliance 200 may be deployed between two networks 104(1) and 104(2), and appliances 200 may communicate with one another to work in conjunction to, for example, accelerate network traffic between clients 102 and servers 106. In other embodiments, the appliance 200 may be located on a network 104. For example, appliance 200 may be implemented as part of one of clients 102 and/or servers 106. In an embodiment, appliance 200 may be implemented as a network device such as Citrix networking (formerly NetScaler^{®}) products sold by Citrix Systems, Inc. of Fort Lauderdale, FL.

As shown in FIG. 1A, one or more servers 106 may operate as a server farm 38. Servers 106 of server farm 38 may be logically grouped, and may either be geographically co-located (e.g., on premises) or geographically dispersed (e.g., cloud based) from clients 102 and/or other servers 106. In an embodiment, server farm 38 executes one or more applications on behalf of one or more of clients 102 (e.g., as an application server), although other uses are possible, such as a file server, gateway server, proxy server, or other similar server uses. Clients 102 may seek access to hosted applications on servers 106.

As shown in FIG. 1A, in some embodiments, appliances 200 may include, be replaced by, or be in communication with, one or more additional appliances, such as WAN optimization appliances 205(1)-205(n), referred to generally as WAN optimization appliance(s) 205. For example, WAN optimization appliance 205 may accelerate, cache, compress or otherwise optimize or improve performance, operation, flow control, or quality of service of network traffic, such as traffic to and/or from a WAN connection, such as optimizing Wide Area File Services (WAFS), accelerating Server Message Block (SMB) or Common Internet File System (CIFS). In some embodiments, appliance 205 may be a performance enhancing proxy or a WAN optimization controller. In one embodiment, appliance 205 may be implemented as Citrix SD-WAN products sold by Citrix Systems, Inc. of Fort Lauderdale, FL.

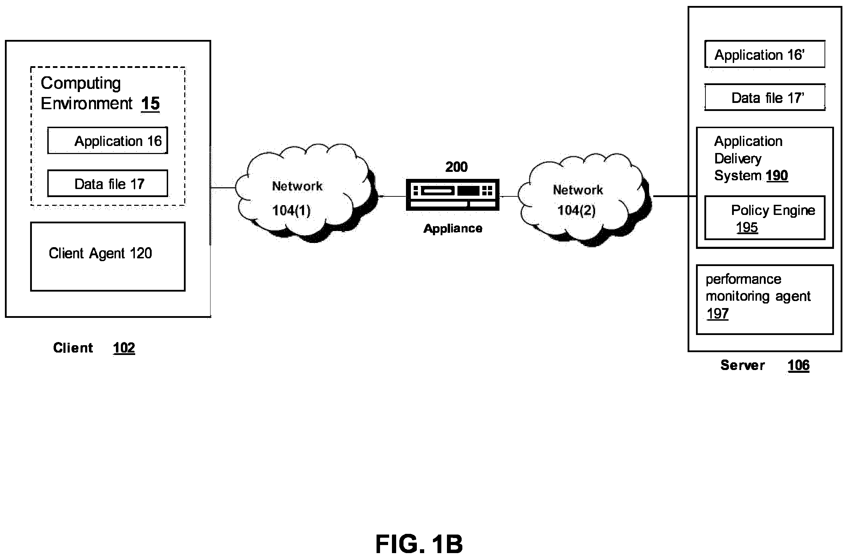

Referring to FIG. 1B, an example network environment, 100', for delivering and/or operating a computing network environment on a client 102 is shown. As shown in FIG. 1B, a server 106 may include an application delivery system 190 for delivering a computing environment, application, and/or data files to one or more clients 102. Client 102 may include client agent 120 and computing environment 15. Computing environment 15 may execute or operate an application, 16, that accesses, processes or uses a data file 17. Computing environment 15, application 16 and/or data file 17 may be delivered via appliance 200 and/or the server 106.

Appliance 200 may accelerate delivery of all or a portion of computing environment 15 to a client 102, for example by the application delivery system 190. For example, appliance 200 may accelerate delivery of a streaming application and data file processable by the application from a data center to a remote user location by accelerating transport layer traffic between a client 102 and a server 106. Such acceleration may be provided by one or more techniques, such as: 1) transport layer connection pooling, 2) transport layer connection multiplexing, 3) transport control protocol buffering, 4) compression, 5) caching, or other techniques. Appliance 200 may also provide load balancing of servers 106 to process requests from clients 102, act as a proxy or access server to provide access to the one or more servers 106, provide security and/or act as a firewall between a client 102 and a server 106, provide Domain Name Service (DNS) resolution, provide one or more virtual servers or virtual internet protocol servers, and/or provide a secure virtual private network (VPN) connection from a client 102 to a server 106, such as a secure socket layer (SSL) VPN connection and/or provide encryption and decryption operations.

Application delivery management system 190 may deliver computing environment 15 to a user (e.g., client 102), remote or otherwise, based on authentication and authorization policies applied by policy engine 195. A remote user may obtain a computing environment and access to server stored applications and data files from any network-connected device (e.g., client 102). For example, appliance 200 may request an application and data file from server 106. In response to the request, application delivery system 190 and/or server 106 may deliver the application and data file to client 102, for example via an application stream to operate in computing environment 15 on client 102, or via a remote-display protocol or otherwise via remote-based or server-based computing. In an embodiment, application delivery system 190 may be implemented as any portion of the Citrix Workspace Suite^{™} by Citrix Systems, Inc., such as Citrix DaaS^{™} (formerly Citrix Virtual Apps and Desktops, XenApp^{®} and XenDesktop^{®}).

Policy engine 195 may control and manage the access to, and execution and delivery of, applications. For example, policy engine 195 may determine the one or more applications a user or client 102 may access and/or how the application should be delivered to the user or client 102, such as a server-based computing, streaming or delivering the application locally to the client 102 for local execution.

For example, in operation, a client 102 may request execution of an application (e.g., application 16') and application delivery system 190 of server 106 determines how to execute application 16', for example based upon credentials received from client 102 and a user policy applied by policy engine 195 associated with the credentials. For example, application delivery system 190 may enable client 102 to receive application-output data generated by execution of the application on a server 106, may enable client 102 to execute the application locally after receiving the application from server 106, or may stream the application via network 104 to client 102. For example, in some embodiments, the application may be a server-based or a remote-based application executed on server 106 on behalf of client 102. Server 106 may display output to client 102 using a thin-client or remote-display protocol, such as the Independent Computing Architecture (ICA) protocol by Citrix Systems, Inc. of Fort Lauderdale, FL. The application may be any application related to real-time data communications, such as applications for streaming graphics, streaming video and/or audio or other data, delivery of remote desktops or workspaces or hosted services or applications, for example infrastructure as a service (IaaS), desktop as a service (DaaS), workspace as a service (WaaS), software as a service (SaaS) or platform as a service (PaaS).

One or more of servers 106 may include a performance monitoring service or agent 197. In some embodiments, a dedicated one or more servers 106 may be employed to perform performance monitoring. Performance monitoring may be performed using data collection, aggregation, analysis, management and reporting, for example by software, hardware or a combination thereof. Performance monitoring may include one or more agents for performing monitoring, measurement and data collection activities on clients 102 (e.g., client agent 120), servers 106 (e.g., agent 197) or an appliance 200 and/or 205 (agent not shown). In general, monitoring agents (e.g., 120 and/or 197) execute transparently (e.g., in the background) to any application and/or user of the device. In some embodiments, monitoring agent 197 includes any of the product embodiments referred to as Citrix Analytics or Citrix Application Delivery Management by Citrix Systems, Inc. of Fort Lauderdale, FL.

The monitoring agents 120 and 197 may monitor, measure, collect, and/or analyze data on a predetermined frequency, based upon an occurrence of given event(s), or in real time during operation of network environment 100. The monitoring agents may monitor resource consumption and/or performance of hardware, software, and/or communications resources of clients 102, networks 104, appliances 200 and/or 205, and/or servers 106. For example, network connections such as a transport layer connection, network latency, bandwidth utilization, end-user response times, application usage and performance, session connections to an application, cache usage, memory usage, processor usage, storage usage, database transactions, client and/or server utilization, active users, duration of user activity, application crashes, errors, or hangs, the time required to log-in to an application, a server, or the application delivery system, and/or other performance conditions and metrics may be monitored.

The monitoring agents 120 and 197 may provide application performance management for application delivery system 190. For example, based upon one or more monitored performance conditions or metrics, application delivery system 190 may be dynamically adjusted, for example periodically or in real-time, to optimize application delivery by servers 106 to clients 102 based upon network environment performance and conditions.

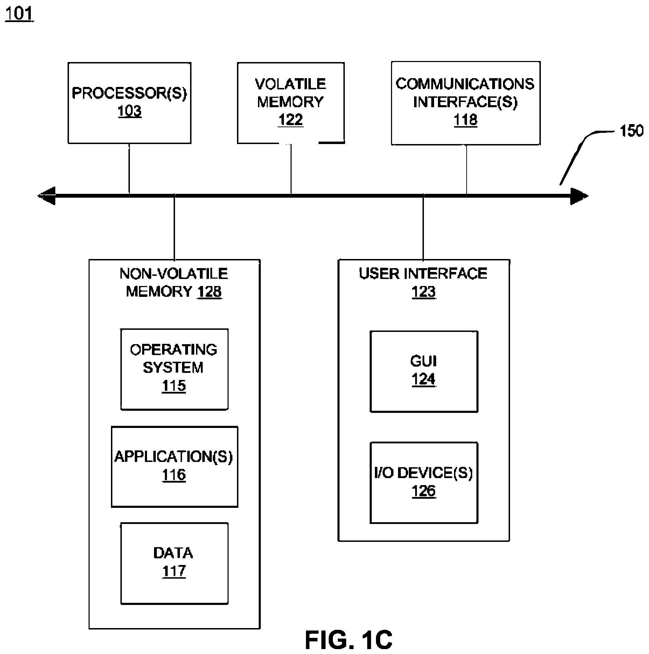

In described embodiments, clients 102, servers 106, and appliances 200 and 205 may be deployed as and/or executed on any type and form of computing device, such as any desktop computer, laptop computer, or mobile device capable of communication over at least one network and performing the operations described herein. For example, clients 102, servers 106 and/or appliances 200 and 205 may each correspond to one computer, a plurality of computers, or a network of distributed computers such as computer 101 shown in FIG. 1C.

As shown in FIG. 1C, computer 101 may include one or more processors 103, volatile memory 122 (e.g., RAM), non-volatile memory 128 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 123, one or more communications interfaces 118, and communication bus 150. User interface 123 may include graphical user interface (GLTI) 124 (e.g., a touchscreen, a display, etc.) and one or more input/output (I/O) devices 126 (e.g., a mouse, a keyboard, etc.). Non-volatile memory 128 stores operating system 115, one or more applications 116, and data 117 such that, for example, computer instructions of operating system 115 and/or applications 116 are executed by processor(s) 103 out of volatile memory 122. Data may be entered using an input device of GUI 124 or received from I/O device(s) 126. Various elements of computer 101 may communicate via communication bus 150. Computer 101 as shown in FIG. 1C is shown merely as an example, as clients 102, servers 106 and/or appliances 200 and 205 may be implemented by any computing or processing environment and with any type of machine or set of machines that may have suitable hardware and/or software capable of operating as described herein.

Processor(s) 103 may be implemented by one or more programmable processors executing one or more computer programs to perform the functions of the system. As used herein, the term "processor" describes an electronic circuit that performs a function, an operation, or a sequence of operations. The function, operation, or sequence of operations may be hard coded into the electronic circuit or soft coded by way of instructions held in a memory device. A "processor" may perform the function, operation, or sequence of operations using digital values or using analog signals. In some embodiments, the "processor" can be embodied in one or more application specific integrated circuits (ASICs), microprocessors, digital signal processors, microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors.

Communications interfaces 118 may include one or more interfaces to enable computer 101 to access a computer network such as a LAN, a WAN, or the Internet through a variety of wired and/or wireless or cellular connections.

In described embodiments, a first computing device 101 may execute an application on behalf of a user of a client computing device (e.g., a client 102), may execute a virtual machine, which provides an execution session within which applications execute on behalf of a user or a client computing device (e.g., a client 102), such as a hosted desktop session, may execute a terminal services session to provide a hosted desktop environment, or may provide access to a computing environment including one or more of: one or more applications, one or more desktop applications, and one or more desktop sessions in which one or more applications may execute.

### B. Appliance Architecture

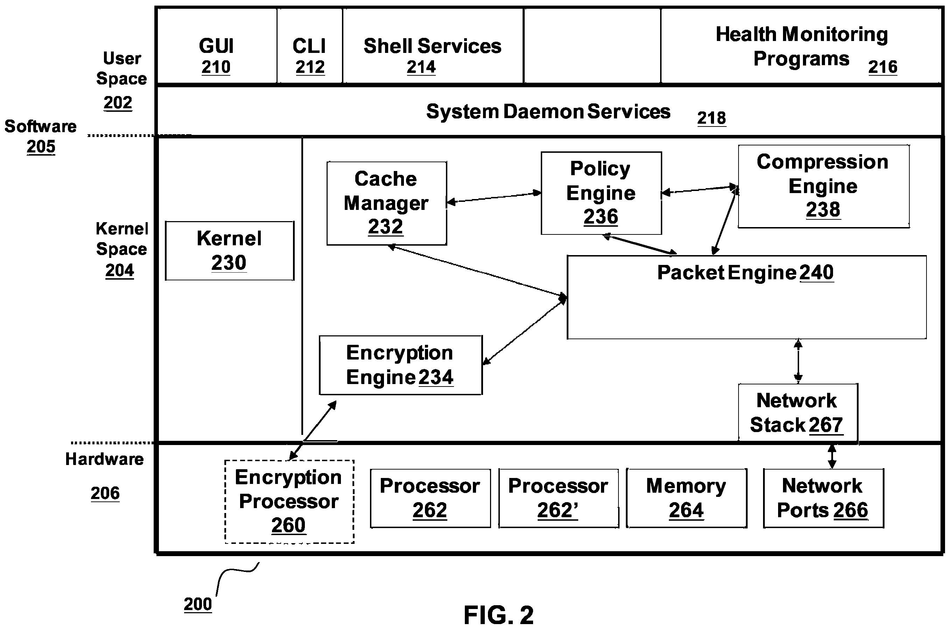

FIG. 2 shows an example embodiment of appliance 200. As described herein, appliance 200 may be implemented as a server, gateway, router, switch, bridge or other type of computing or network device. As shown in FIG. 2, an embodiment of appliance 200 may include a hardware layer 206 and a software layer divided into a user space 202 and a kernel space 204. Hardware layer 206 provides the hardware elements upon which programs and services within kernel space 204 and user space 202 are executed and allow programs and services within kernel space 204 and user space 202 to communicate data both internally and externally with respect to appliance 200. As shown in FIG. 2, hardware layer 206 may include one or more processing units 262 for executing software programs and services, memory 264 for storing software and data, network ports 266 for transmitting and receiving data over a network, and encryption processor 260 for encrypting and decrypting data such as in relation to Secure Socket Layer (SSL) or Transport Layer Security (TLS) processing of data transmitted and received over the network.

An operating system of appliance 200 allocates, manages, or otherwise segregates the available system memory into kernel space 204 and user space 202. Kernel space 204 is reserved for running kernel 230, including any device drivers, kernel extensions or other kernel related software. As known to those skilled in the art, kernel 230 is the core of the operating system, and provides access, control, and management of resources and hardware-related elements of appliance 200. Kernel space 204 may also include a number of network services or processes working in conjunction with cache manager 232.

Appliance 200 may include one or more network stacks 267, such as a TCP/IP based stack, for communicating with client(s) 102, server(s) 106, network(s) 104, and/or other appliances 200 or 205. For example, appliance 200 may establish and/or terminate one or more transport layer connections between clients 102 and servers 106. Each network stack 267 may include a buffer 243 for queuing one or more network packets for transmission by appliance 200.

Kernel space 204 may include cache manager 232, packet engine 240, encryption engine 234, policy engine 236 and compression engine 238. In other words, one or more of processes 232, 240, 234, 236 and 238 run in the core address space of the operating system of appliance 200, which may reduce the number of data transactions to and from the memory and/or context switches between kernel mode and user mode, for example since data obtained in kernel mode may not need to be passed or copied to a user process, thread or user level data structure.

Cache manager 232 may duplicate original data stored elsewhere or data previously computed, generated or transmitted to reducing the access time of the data. In some embodiments, the cache memory may be a data object in memory 264 of appliance 200, or may be a physical memory having a faster access time than memory 264.

Policy engine 236 may include a statistical engine or other configuration mechanism to allow a user to identify, specify, define or configure a caching policy and access, control and management of objects, data or content being cached by appliance 200, and define or configure security, network traffic, network access, compression or other functions performed by appliance 200.

Encryption engine 234 may process any security related protocol, such as SSL or TLS. For example, encryption engine 234 may encrypt and decrypt network packets, or any portion thereof, communicated via appliance 200, may setup or establish SSL, TLS or other secure connections, for example between client 102, server 106, and/or other appliances 200 or 205. In some embodiments, encryption engine 234 may use a tunneling protocol to provide a VPN between a client 102 and a server 106. In some embodiments, encryption engine 234 is in communication with encryption processor 260. Compression engine 238 compresses network packets bi-directionally between clients 102 and servers 106 and/or between one or more appliances 200.

Packet engine 240 may manage kernel-level processing of packets received and transmitted by appliance 200 via network stacks 267 to send and receive network packets via network ports 266. Packet engine 240 may operate in conjunction with encryption engine 234, cache manager 232, policy engine 236 and compression engine 238, for example to perform encryption/decryption, traffic management such as request-level content switching and request-level cache redirection, and compression and decompression of data.

User space 202 is a memory area or portion of the operating system used by user mode applications or programs otherwise running in user mode. A user mode application may not access kernel space 204 directly and uses service calls in order to access kernel services. User space 202 may include graphical user interface (GLTI) 210, a command line interface (CLI) 212, shell services 214, health monitor 216, and daemon services 218. GUI 210 and CLI 212 enable a system administrator or other user to interact with and control the operation of appliance 200, such as via the operating system of appliance 200. Shell services 214 include the programs, services, tasks, processes or executable instructions to support interaction with appliance 200 by a user via the GUI 210 and/or CLI 212.

Health monitor 216 monitors, checks, reports and ensures that network systems are functioning properly and that users are receiving requested content over a network, for example by monitoring activity of appliance 200. In some embodiments, health monitor 216 intercepts and inspects any network traffic passed via appliance 200. For example, health monitor 216 may interface with one or more of encryption engine 234, cache manager 232, policy engine 236, compression engine 238, packet engine 240, daemon services 218, and shell services 214 to determine a state, status, operating condition, or health of any portion of the appliance 200. Further, health monitor 216 may determine if a program, process, service or task is active and currently running, check status, error or history logs provided by any program, process, service or task to determine any condition, status or error with any portion of appliance 200. Additionally, health monitor 216 may measure and monitor the performance of any application, program, process, service, task or thread executing on appliance 200.

Daemon services 218 are programs that run continuously or in the background and handle periodic service requests received by appliance 200. In some embodiments, a daemon service may forward the requests to other programs or processes, such as another daemon service 218 as appropriate.

As described herein, appliance 200 may relieve servers 106 of much of the processing load caused by repeatedly opening and closing transport layer connections to clients 102 by opening one or more transport layer connections with each server 106 and maintaining these connections to allow repeated data accesses by clients via the Internet (e.g., "connection pooling"). To perform connection pooling, appliance 200 may translate or multiplex communications by modifying sequence numbers and acknowledgment numbers at the transport layer protocol level (e.g., "connection multiplexing"). Appliance 200 may also provide switching or load balancing for communications between the client 102 and server 106.

As described herein, each client 102 may include client agent 120 for establishing and exchanging communications with appliance 200 and/or server 106 via a network 104. Client 102 may have installed and/or execute one or more applications that are in communication with network 104. Client agent 120 may intercept network communications from a network stack used by the one or more applications. For example, client agent 120 may intercept a network communication at any point in a network stack and redirect the network communication to a destination desired, managed or controlled by client agent 120, for example to intercept and redirect a transport layer connection to an IP address and port controlled or managed by client agent 120. Thus, client agent 120 may transparently intercept any protocol layer below the transport layer, such as the network layer, and any protocol layer above the transport layer, such as the session, presentation or application layers. Client agent 120 can interface with the transport layer to secure, optimize, accelerate, route or load-balance any communications provided via any protocol carried by the transport layer.

In some embodiments, client agent 120 is implemented as an Independent Computing Architecture (ICA) client developed by Citrix Systems, Inc. of Fort Lauderdale, FL. Client agent 120 may perform acceleration, streaming, monitoring, and/or other operations. For example, client agent 120 may accelerate streaming an application from a server 106 to a client 102. Client agent 120 may also perform end-point detection/scanning and collect end-point information about client 102 for appliance 200 and/or server 106. Appliance 200 and/or server 106 may use the collected information to determine and provide access, authentication and authorization control of the client's connection to network 104. For example, client agent 120 may identify and determine one or more client-side attributes, such as: the operating system and/or a version of an operating system, a service pack of the operating system, a running service, a running process, a file, presence or versions of various applications of the client, such as antivirus, firewall, security, and/or other software.

### C. Systems and Methods for Providing Virtualized Application Delivery Controller

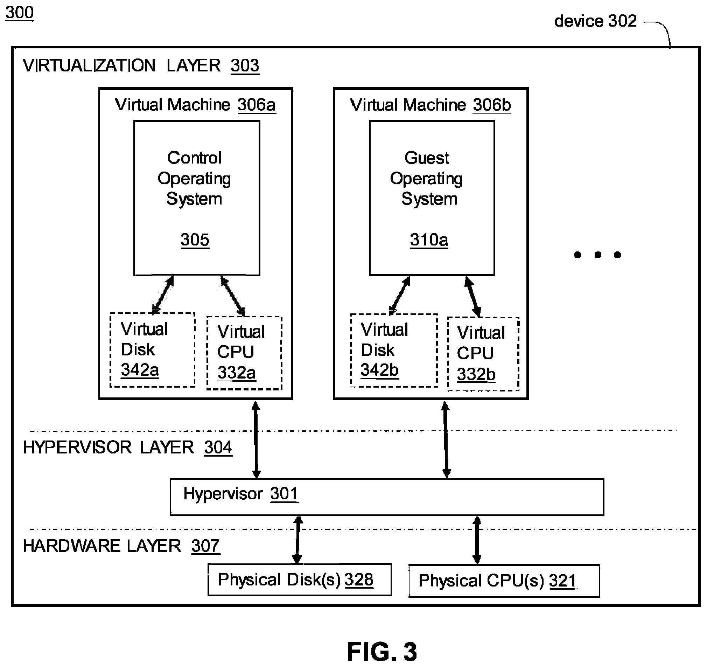

Referring now to FIG. 3, a block diagram of a virtualized environment 300 is shown. As shown, a computing device 302 in virtualized environment 300 includes a virtualization layer 303, a hypervisor layer 304, and a hardware layer 307. Hypervisor layer 304 includes one or more hypervisors (or virtualization managers) 301 that allocates and manages access to a number of physical resources in hardware layer 307 (e.g., physical processor(s) 321 and physical disk(s) 328) by at least one virtual machine (VM) (e.g., one of VMs 306) executing in virtualization layer 303. Each VM 306 may include allocated virtual resources such as virtual processors 332 and/or virtual disks 342, as well as virtual resources such as virtual memory and virtual network interfaces. In some embodiments, at least one of VMs 306 may include a control operating system (e.g., 305) in communication with hypervisor 301 and used to execute applications for managing and configuring other VMs (e.g., guest operating systems 310) on device 302.

In general, hypervisor(s) 301 may provide virtual resources to an operating system of VMs 306 in any manner that simulates the operating system having access to a physical device. Thus, hypervisor(s) 301 may be used to emulate virtual hardware, partition physical hardware, virtualize physical hardware, and execute virtual machines that provide access to computing environments. In an illustrative embodiment, hypervisor(s) 301 may be implemented as a Citrix Hypervisor by Citrix Systems, Inc. of Fort Lauderdale, FL. In an illustrative embodiment, device 302 executing a hypervisor that creates a virtual machine platform on which guest operating systems may execute is referred to as a host server. 302

Hypervisor 301 may create one or more VMs 306 in which an operating system (e.g., control operating system 305 and/or guest operating system 310) executes. For example, the hypervisor 301 loads a virtual machine image to create VMs 306 to execute an operating system. Hypervisor 301 may present VMs 306 with an abstraction of hardware layer 307, and/or may control how physical capabilities of hardware layer 307 are presented to VMs 306. For example, hypervisor(s) 301 may manage a pool of resources distributed across multiple physical computing devices.

In some embodiments, one of VMs 306 (e.g., the VM executing control operating system 305) may manage and configure other of VMs 306, for example by managing the execution and/or termination of a VM and/or managing allocation of virtual resources to a VM. In various embodiments, VMs may communicate with hypervisor(s) 301 and/or other VMs via, for example, one or more Application Programming Interfaces (APIs), shared memory, and/or other techniques.

In general, VMs 306 may provide a user of device 302 with access to resources within virtualized computing environment 300, for example, one or more programs, applications, documents, files, desktop and/or computing environments, or other resources. In some embodiments, VMs 306 may be implemented as fully virtualized VMs that are not aware that they are virtual machines (e.g., a Hardware Virtual Machine or HVM). In other embodiments, the VM may be aware that it is a virtual machine, and/or the VM may be implemented as a paravirtualized (PV) VM.

Although shown in FIG. 3 as including a single virtualized device 302, virtualized environment 300 may include a plurality of networked devices in a system in which at least one physical host executes a virtual machine. A device on which a VM executes may be referred to as a physical host and/or a host machine. For example, appliance 200 may be additionally or alternatively implemented in a virtualized environment 300 on any computing device, such as a client 102, server 106 or appliance 200. Virtual appliances may provide functionality for availability, performance, health monitoring, caching and compression, connection multiplexing and pooling and/or security processing (e.g., firewall, VPN, encryption/decryption, etc.), similarly as described in regard to appliance 200.

In some embodiments, a server may execute multiple virtual machines 306, for example on various cores of a multi-core processing system and/or various processors of a multiple processor device. For example, although generally shown herein as "processors" (e.g., in FIGs. 1C, 2 and 3), one or more of the processors may be implemented as either single- or multi-core processors to provide a multi-threaded, parallel architecture and/or multi-core architecture. Each processor and/or core may have or use memory that is allocated or assigned for private or local use that is only accessible by that processor/core, and/or may have or use memory that is public or shared and accessible by multiple processors/cores. Such architectures may allow work, task, load or network traffic distribution across one or more processors and/or one or more cores (e.g., by functional parallelism, data parallelism, flow-based data parallelism, etc.).

Further, instead of (or in addition to) the functionality of the cores being implemented in the form of a physical processor/core, such functionality may be implemented in a virtualized environment (e.g., 300) on a client 102, server 106 or appliance 200, such that the functionality may be implemented across multiple devices, such as a cluster of computing devices, a server farm or network of computing devices, etc. The various processors/cores may interface or communicate with each other using a variety of interface techniques, such as core to core messaging, shared memory, kernel APIs, etc.

In embodiments employing multiple processors and/or multiple processor cores, described embodiments may distribute data packets among cores or processors, for example to balance the flows across the cores. For example, packet distribution may be based upon determinations of functions performed by each core, source and destination addresses, and/or whether: a load on the associated core is above a predetermined threshold; the load on the associated core is below a predetermined threshold; the load on the associated core is less than the load on the other cores; or any other metric that can be used to determine where to forward data packets based in part on the amount of load on a processor.

For example, data packets may be distributed among cores or processes using receive-side scaling (RSS) in order to process packets using multiple processors/cores in a network. RSS generally allows packet processing to be balanced across multiple processors/cores while maintaining in-order delivery of the packets. In some embodiments, RSS may use a hashing scheme to determine a core or processor for processing a packet.

The RSS may generate hashes from any type and form of input, such as a sequence of values. This sequence of values can include any portion of the network packet, such as any header, field or payload of network packet, and include any tuples of information associated with a network packet or data flow, such as addresses and ports. The hash result or any portion thereof may be used to identify a processor, core, engine, etc., for distributing a network packet, for example via a hash table, indirection table, or other mapping technique.

### D. Systems and Methods for Providing a Distributed Cluster Architecture

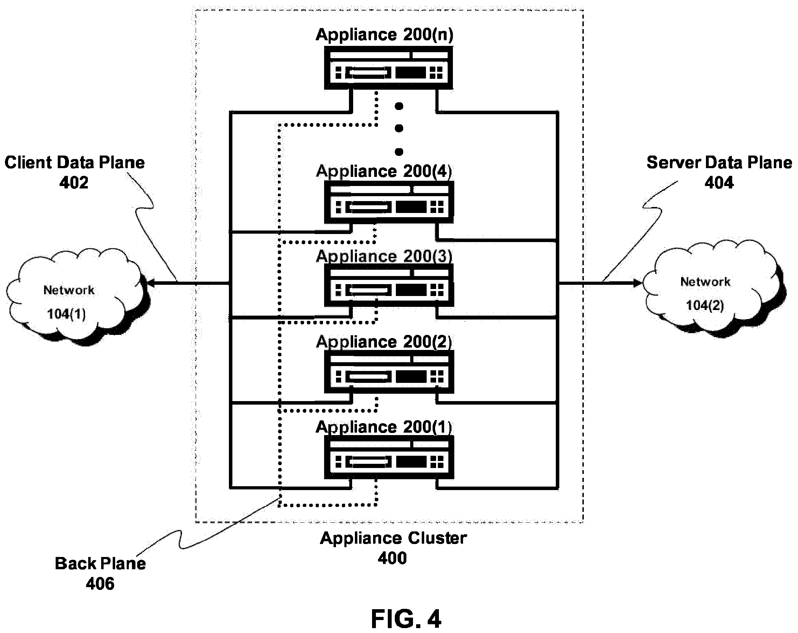

Although shown in FIGs. 1A and 1B as being single appliances, appliances 200 may be implemented as one or more distributed or clustered appliances. Individual computing devices or appliances may be referred to as nodes of the cluster. A centralized management system may perform load balancing, distribution, configuration, or other tasks to allow the nodes to operate in conjunction as a single computing system. Such a cluster may be viewed as a single virtual appliance or computing device. FIG. 4 shows a block diagram of an illustrative computing device cluster or appliance cluster 400. A plurality of appliances 200 or other computing devices (e.g., nodes) may be joined into a single cluster 400. Cluster 400 may operate as an application server, network storage server, backup service, or any other type of computing device to perform many of the functions of appliances 200 and/or 205.

In some embodiments, each appliance 200 of cluster 400 may be implemented as a multi-processor and/or multi-core appliance, as described herein. Such embodiments may employ a two-tier distribution system, with one appliance if the cluster distributing packets to nodes of the cluster, and each node distributing packets for processing to processors/cores of the node. In many embodiments, one or more of appliances 200 of cluster 400 may be physically grouped or geographically proximate to one another, such as a group of blade servers or rack mount devices in a given chassis, rack, and/or data center. In some embodiments, one or more of appliances 200 of cluster 400 may be geographically distributed, with appliances 200 not physically or geographically co-located. In such embodiments, geographically remote appliances may be joined by a dedicated network connection and/or VPN. In geographically distributed embodiments, load balancing may also account for communications latency between geographically remote appliances.

In some embodiments, cluster 400 may be considered a virtual appliance, grouped via common configuration, management, and purpose, rather than as a physical group. For example, an appliance cluster may comprise a plurality of virtual machines or processes executed by one or more servers.

As shown in FIG. 4, appliance cluster 400 may be coupled to a first network 104(1) via client data plane 402, for example to transfer data between clients 102 and appliance cluster 400. Client data plane 402 may be implemented a switch, hub, router, or other similar network device internal or external to cluster 400 to distribute traffic across the nodes of cluster 400. For example, traffic distribution may be performed based on equal-cost multi-path (ECMP) routing with next hops configured with appliances or nodes of the cluster, open-shortest path first (OSPF), stateless hash-based traffic distribution, link aggregation (LAG) protocols, or any other type and form of flow distribution, load balancing, and routing.

Appliance cluster 400 may be coupled to a second network 104(2) via server data plane 404. Similarly to client data plane 402, server data plane 404 may be implemented as a switch, hub, router, or other network device that may be internal or external to cluster 400. In some embodiments, client data plane 402 and server data plane 404 may be merged or combined into a single device.

In some embodiments, each appliance 200 of cluster 400 may be connected via an internal communication network or back plane 406. Back plane 406 may enable inter-node or inter-appliance control and configuration messages, for inter-node forwarding of traffic, and/or for communicating configuration and control traffic from an administrator or user to cluster 400. In some embodiments, back plane 406 may be a physical network, a VPN or tunnel, or a combination thereof.

### E. Systems and Methods for key performance metric benchmarking

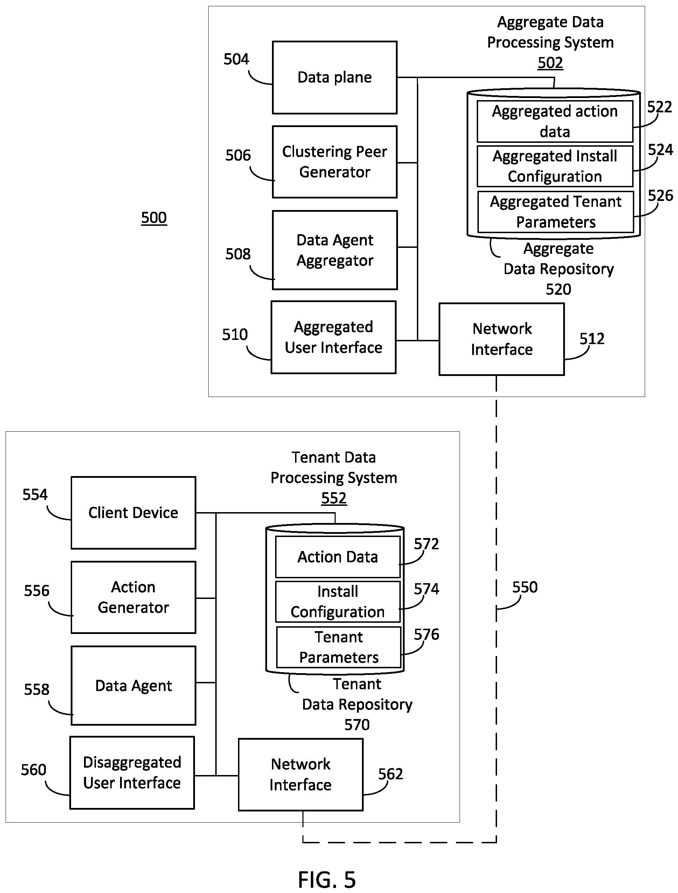

FIG. 5 is a block diagram of an system 500 for KPI benchmarking, in accordance with an illustrative embodiment. The system 500 can compare a performance of one or more constituent actions (e.g., a subdivision of an action having a performance metric associated therewith). The system 500 can include, interface, or otherwise communicate with an aggregate data processing system 502. The system 500 can include, interface, or otherwise communicate with a tenant data processing system 552. The aggregate data processing system 502 can communicate with the tenant data processing system 552 via a network 550. The network 550 can include computer networks such as the Internet, local, wide, metro, or other area networks, intranets, cellular networks, satellite networks, and other communication networks such as voice or data mobile telephone networks. The network 550 can be public or private.

The system 500 can include at least one aggregate data processing system 502 to receive, aggregate, process, and/or display information for one or more tenant data processing systems 552. The aggregate data processing system 502 can include at least one data plane 504, clustering peer generator 506, data agent aggregator 508, aggregated user interface 510, network interface 512, or aggregate data repository 520. The data plane 504, clustering peer generator 506, data agent aggregator 508, aggregated user interface 510, or network interface 512 can each include at least one processing unit or other logic device such as programmable logic array engine, or module configured to communicate with the aggregate data repository 520 or database. The data plane 504, clustering peer generator 506, data agent aggregator 508, aggregated user interface 510, or network interface 512 can be separate components, a single component, or part of the aggregate data processing system 502. The aggregate data processing system 502 can include hardware elements, such as one or more processors, logic devices, or circuits. For example, the aggregate data processing system 502 can include one or more components or structures of functionality of computing devices depicted in FIG. 1C.

The aggregate data repository 520 can include one or more local or distributed databases, and can include a database management system. The aggregate data repository 520 can include computer data storage or memory. The aggregate data repository 520 can be configured to store one or more of aggregate action data 522, aggregated install configuration 524, and/or aggregated tenant parameters 526. Each of the aggregated data can include the data associated with any of the information of the one or more tenant data repositories 570, and variations or derivatives thereof (e.g., averages, standard deviations, or the like).

The system can include at least one tenant data processing system 552. The tenant data processing system 552 can include at least one client device 554, action generator 556, data agent 558, disaggregated user interface 560, network interface 562, or tenant data repository 570. The client device 554, action generator 556, data agent 558, disaggregated user interface 560, or network interface 562 can each include at least one processing unit or other logic device such as programmable logic array engine, or other hardware configured to communicate with the tenant data repository 570 or database. The client device 554, action generator 556, data agent 558, disaggregated user interface 560, or network interface 562 can be separate components, a single component, or part of the tenant data processing system 552. The tenant data processing system 552 can include hardware elements, such as one or more processors, logic devices, or circuits. For example, the tenant data processing system 552 can include one or more components or structures of functionality of computing device depicted in FIG. 1C.

The tenant data repository 570 can include one or more local or distributed databases, and can include a database management system. The tenant data repository 570 can include computer data storage or memory. The tenant data repository 570 can be configured to store one or more of action data 572, install configuration 574, or tenant parameters 576. The action data 572 can include performance metrics associated with one or more opera rations of a device of a tenant system such as latency, or bandwidth (e.g., associated with a resource of the tenant data processing system 552). The install configuration 574 can include hardware or software parameters of client or server devices associated with the tenant data processing system 552. The tenant parameters 576 can include one or more attributes of the tenants such as a sector, number of employees, number of devices, quantity or type of applications or the like.

The aggregate data processing system 502 can include one or more data planes 504. The data plane 504 can contain one or more dimensions (e.g., scalar dimensions) of data of each of various tenants. For example, a dimension can define a number of employees of a tenant, a number of client devices 554 of a tenant, a sector of a tenant, a number of virtual applications hosted by the tenant data processing system 552, and so forth. Each tenant can be associated with one or more tenant data processing systems 552.

A data plane 504 can be linear or non-linear. For example, a data plane 504 can include a number of employees. According to one or more parameters, a company having 5,000 employees can exhibit greater similarities to a company having 10,000 employees than a company having 500 employees, such that a logarithmic dimension can be defined. In some embodiments, a data plane can be linear, and a clustering peer generator 506 can apply a non-linear function to aggregate peers. Some data plane 504 dimensions can be discrete. For example, an industry (e.g., banking, heavy manufacturing, or consumer electronics) can be included in the data plane as one or more discrete dimensions, or industries can be oriented according to one or more continuous or non-continuous (e.g., stepwise) dimensions. For example, an industry can be subdivided to constituent portions which can be associated with a characteristics thereof (e.g., based on a number or proportion of connected employees, a number or proportion of employees working in an office, from home, or at another remote setting, or the like). A data plane 504 can be implemented as a data lake, wherein information related to a tenant (e.g., an enterprise) can be consolidated for comparison on a per-action basis (including a constituent action basis).

The aggregate data processing system 502 can include one or more clustering peer generator 506. The clustering peer generator 506 can cluster multiple tenants according to various shared, similar, or associated attributes. For example, the clustering peer generator 506 can employ clustering, associational, or classification techniques to determine a peer group for one or more tenants. For example, a density-based spatial clustering of applications with noise (DBSCAN), hierarchical versions thereof (HDBSCAN) or K-means clustering system can determine a cluster of tenants. A random forest or decision tree can classify various tenants into one or more classes, such as pre-defined classes or ad-hoc classes (either of which can be a cluster). In some embodiments, clusters can be defined according to a distance such as a Cartesian distance between tenants as described on a data plane 504. Clusters can be defined on a per-tenant basis (e.g., can be generated relative to a target client) and/or on an aggregate basis (e.g., without regard to a particular targeted client).

The clustering peer generator 506 can be configured to receive inputs. For example, per-tenant clusters can be manipulated (e.g., by the tenant). The clustering peer generator 506 can receive a parameter, such as absent, incorrect, or projected information. For example, the peer clustering generator can receive a number of employees to replace an erroneous, outdated, or missing number of employees. The clustering peer generator 506 can receive an adjustment for a parameter. For example, the tenant can provide information indicative of various peer groups responsive to various inputs. The clustering peer generator 506 can receive iterative inputs based on user responses to information displayed by an aggregated user interface 510 or disaggregated user interface 560. The clustering peer generator 506 can receive inputs to expand or contract a cluster size, such as according to one or more predefined settings or scales or can receive specific attributes adjust a cluster size. For example, a clustering peer generator 506 can receive an indication to ignore one or more parameters, to adjust a weighted value of one or more parameters, or to display a number or range of peers (e.g., 20, 50, or 100). A clustering peer generator 506 can receive inputs to subdivide, merge, or otherwise manipulate a tenant base. For example, a tenant can include two distinguishable locations, business groups, or employee types which can be analyzed separately.

The aggregate data processing system 502 can include one or more data agent aggregators 508. The data agent aggregators 508 can receive action data 572 from one or more data agents 558 associated with each tenant data processing system 552. The data agent aggregators can combine the action data 572 to generate aggregated action data 522. The data agent aggregators 508 can receive information such as a performance indication of one or more KPIs of an tenant. The KPIs can relate to a login time for a resource of the tenant (e.g., accessible to, hosted by, or otherwise associated with). For example, the resource can be hosted by the tenant or by a third party, such as a cloud-based solution. The data agent aggregators 508 can determine or interpolate additional information. For example, a data agent aggregator 508 can append a timestamp to received information. A data agent aggregator 508 can receive near-real-time data which can be stored in the aggregate data repository 520. The data agent aggregator 508 can store all received information or consolidate, compress, or otherwise reduce a data set for storage in the aggregate date repository 520. For example, the data agent aggregator 508 can receive information related to every action and constituent action of a tenant, and store an average time thereof (e.g., daily average, hourly average, or minutely average). The data agent aggregator 508 can remove or anonymize identifiable or private information which is received. For example, the data agent aggregator 508 can receive a user name, a user device type, a user login location, or other information which can be tokenized, removed, or generalized for later comparison. In some embodiments, a user can receive an indication, (e.g., from a tenant) of a level of desired anonymization (e.g., to retain additional data for analytics, or remove data according to a data retention or sharing policy).

The data agent aggregators 508 can receive one or more parameters of a tenant, or any associated information for the tenant (e.g., number of employees). For example, the data agent aggregators 508 can receive information from a tenant (e.g., directly or manually input from an admin of the tenant), a database including tenant information, etc. For instance, the data agent aggregator 508 can receive tenant parameters 576 according to a predefined format, or can parse source information to determine tenant parameters 576, which can be aggregated between tenants and other sources (e.g., the aggregated user interface 510) for storage as aggregated tenant parameters 526. The data agent aggregator 508 can receive install configurations 574 from various tenant data processing systems 552, such as profile settings or sizes, or a number of available virtual applications desktops or other resources. The data agent aggregator 508 can aggregate the install configurations 524 as an aggregated install configuration 524. The data agent aggregator 508 can receive a total number of files or large files associated with a profile, or total or available CPU, memory, network bandwidth, storage bandwidth, or other attribute of a client device 554, resource host, or other device associated with providing a resource to a user (e.g., a proxy thereof). The data agent aggregator 508 can receive the information from a data agent 558, such as a data agent executing on a virtual machine of a tenant. The data agent aggregator 508 can aggregate or reconcile received information with related information such as additional or overlapping information received from the aggregated user interface 510.

The data agent aggregators 508 can process the received information to generate a comparison between a tenant and a peer group. For example, the data agent aggregators 508 can compare perform statistical analyses on the received data. The data agent aggregator 508 can provide a performance KPI for one or more metrics. For example, the performance KPI can be times for constituent actions of a logon to a hosted resource. Additionally or alternatively, the performance KPI can be or include other metrics relating to performance and/or delivery of content, resources, or network metrics of a computing environment (such as round trip time, latency, or other performance characteristics). The aggregated data can include a one or more examples of a time of a peer (e.g., to form a dot plot or other representation thereof.) The aggregated data can include summaries of the aggregated data, such as averages, standard deviations, maximums or minimums.

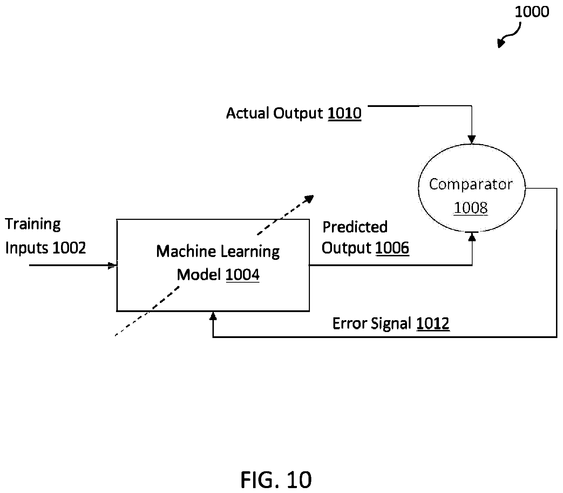

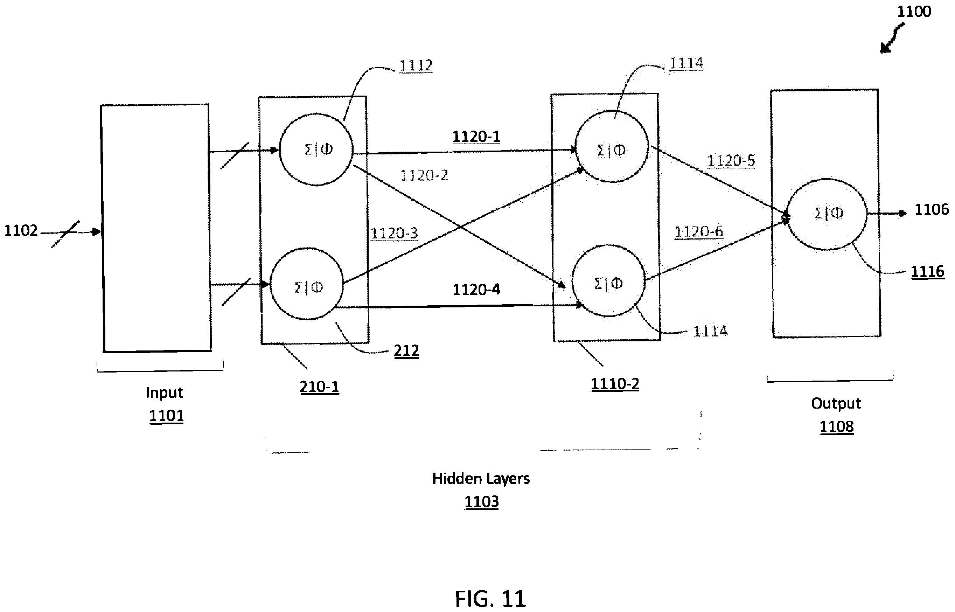

The data agent aggregators 508 can include or interface with a machine learning model. For example, the data agent aggregators 508 can train the machine learning model with all or selected information received associated with a tenant. For example, install configurations 574 such as hardware or other configurations can be used, deployed, or otherwise employed to train the model. The model can predict a performance of a network or predict an impact of a configuration change, as will be further discussed with regard to FIGs 10 and 11. The model can identify important install configuration 574 (e.g., by using an explainable AI model such as a SHAP model to explain variance between tenants as a function of the received install configurations 574 (e.g., free disk space or other memory, processor speed, data link type, or the like). The install configurations 574 can be suggested to a user based on a correlation of the features to performance improvement (e.g., via the aggregated or disaggregated user interfaces 560). For example, the install configurations 574 can be suggested based on an overall analysis of tenants, or specific analysis for a tenant (e.g., based on their performance relative to peers, application selections, and current performance).

In some embodiments, the data agent aggregators 508 can aggregate or compare a performance of a single tenant. For example, the data agent aggregators can compare performance over time of day or time of week (e.g., a logon time may be slower during peak access times). The data agent aggregators 508 can aggregate or compare between profile types, employee types, applications, offices or other access locations, device types (such as between processor manufacturers or operating system selections or parameters), or other install configurations 574 having data available (e.g., from the data agent 558 or disaggregated user interface 560, such as via the network interface 512).

The aggregate data processing system 502 can include one or more aggregated user interfaces 510. The aggregated user interface 510 can include a graphical user interface or other information presentment media. The user interface can depict information provided to the aggregate data processing system 502, such as a communicative connection to a third party database or user terminal. In some embodiments, the aggregated user interface 510 can depict any information which can be depicted from a disaggregated user interface 560. In some embodiments, the aggregated user interface 510 can depict fewer or additional informational displays. For example, the aggregated user interface 510 can include information which may be inaccessible to the tenant data processing system 552 (e.g., specific information of peer group members). For example, information can be detected which can determine common sub-optimal configuration parameters (e.g., common configuration settings or hardware selections associated with performance variances), such that recommendations can be provided (e.g., a preference for a particular CPU architecture, or documentation to avoid extraneous instantiations of unused processes). In some embodiments, the aggregated user interface 510 can determine recommendations based on some information which is unavailable to a tenant data processing system 552.

The aggregate data processing system 502 can include one or more network interfaces 512. The network interface 512 can deliver communication between the components of the aggregate data processing system 502 or other devices, such as the tenant data processing system 552. The network interface 512 can communicate over a network 550. The network 550 can include computer networks such as the Internet, local, wide, metro, or other area networks, intranets, cellular networks, satellite networks, and other communication networks such as voice or data mobile telephone networks. The network 550 can be public or private. The network 550 can include subnets to communicate with various nodes. For example, the network interface 512 can interface with at least the network interface 562 of the tenant data processing system 552 over the network.

The tenant data processing system 552 can include one or more client devices 554. The client devices 554 can be local, remote, wired, wireless, or virtual (e.g., containerized) devices, such as laptops, mobile phones, tablets, desktop computers, or virtual machines. A client device 554 can include or interface with a data agent 558 to provide metrics for performance of actions. For example, a client device 554 can access a resource which requires authentication, session instantiation, or another logon process. At least a portion of the logon action can be performed locally on the client device 554 (e.g., key generation or verification), and at least a portion of the login can be performed by one or more remote devices (e.g., devices communicatively connected over the network 550). The client device 554 can perform further actions which can have associated KPIs such as file compression, startup, compilation, report generation, configuration updates, or other actions. The actions can be local to the client device 554 or include one or more remote resources such as a network resource.

The tenant data processing system 552 can include one or more action generators 556. The action generators 556 can generate actions, such as actions to initiate sessions from a client device 554 to a resource, (e.g., a resource hosted by the tenant data processing system 552). The action generators 556 can generate actions, such as an action to logon to a hosted resource, or the constituent actions thereof. The action generators 556 can be disposed throughout the system 100. For example, the action generators 556 can generate the various constituent actions of a logon action. For example, an action generator 556 of the client device 554 can broker a session with a resource host. Responsive to the brokering of the session, an action generator 556 can start a platform for the session, such as a virtual machine or a container for the session. Responsive to the readied platform, an action generator 556 can associate a user policy or group policy with the user, such as according to user credentials or the client device 554 (e.g., user access control). Responsive to the generation or application of the user control, an action generator 556 can process or execute one or more login scripts by or for the hosted resource. For example, the login script can associate a key or identifier to establish the session with another key or identifier to access a portion of the resource. An action generator 556 can load a profile. For example, the action generator 556 can load a user profile including one or more preferences on the hosted resource. An action generator can initiate an interactive portion of the session, such as by performing a handoff of user controls such as a video feed, keyboard or mouse controls, a data link, or other connections between a client device 554 and a resource host.

In some embodiments, an action generator 556 can include a wait state during which the action generator 556 awaits a response from a user (such as for a manual entry of a password or pin). In some embodiments, various logon actions can be added, omitted, substituted, or modified. For example, a logon can include two (or multi)-factor authentication with a mobile device of a user and may include further constituent actions (e.g., generate request, receive response, verify identity, and so forth). Further, action generators 556 can perform or initiate any other actions, such as actions performed across a network 550. Some action generators 556 can generate exceptions, errors, or other indications of departure from a predefined process, which can be analyzed or compared to benchmark system performance (e.g., according to an error rate or incidence).

The tenant data processing system 552 can include one or more data agents 558. The data agents 558 can gather, aggregate, anonymize, or process data for delivery to the data agent aggregators 508. The data agents 558 can be disposed on one or more client devices 554, hosts, or other devices of the tenant data processing systems 552. The data agents 558 can collect one or more performance metrics or other parameters associated with the client device 554, the host, or the actions. For example, the data agents can collect the information from log files, action generators 556, or the like. For example, the data agents 558 can collect information of the time to perform each of the constituent actions of logon to a remote resource performed by the one or more action generators 556.

The data agents 558 can receive on or more selections from the disaggregated user interface 560. For example, the data agent 558 can receive a polling rate for data, or a subset of data for collection. For example, the data agent 558 can collect a total number of files or large files associated with a profile, or total or available CPU, memory, network bandwidth, storage bandwidth, versions, or other attribute of a client device 554, resource host, or other device. The data agent 558 can collect a timestamp associated with an initiation, completion, or execution of various tasks or otherwise determine an elapsed time for the various actions. The data agents 558 can include one or more configurations for data collection or distribution. The data agent 558 can provide a first set of information to the disaggregated user interface 560 for presentation or local processing and a second set of information. For example, a reduced or anonymized set of information can be provided to the data agent aggregator 508, such as by grouping or tokenizing data to refer to user names or other identifiable data by an associated token and distributing the token.

The tenant data processing system 552 can include one or more disaggregated user interfaces 560. The disaggregated user interface 560 can include a graphical user interface or other presentment media (e.g., to provide a notification, such as by email over the network interface 562). The disaggregated user interface 560 can include a display to present information. For example, the interface can include a graphical user interface to present one or more parameters (e.g., to a user). The disaggregated user interface 560 can present install configuration 574 setting or other features correlated with changes to performance. The presented features can be presented with peer benchmarks (e.g., peer performance) or derivatives thereof (e.g., averages or percentiles). Presented features can be displayed according to the content of the features or the peer data. For example, a feature may not be presented, or may be presented with lesser prominence if the associated feature does not substantially lag peers (e.g., is above average, within one standard deviation of average, within a top tenth percentile, etc.). A feature may not be presented or may be presented with lesser prominence if the feature is not adjustable by the user. For example, if a number of available virtual hosts is fixed, (e.g., is already at a maximum or otherwise unavailable to be increased) the number of hosts may not be presented to the user, even where a number of hosts may be highly related to system performance (e.g., based on a non-action-ability).

The disaggregated user interface 560 can present features according to an order of importance. For example, the disaggregated user interface 560 can present a ranked list. The disaggregated user interface 560 can provide a score along with one or more of the features. For example, a score can be a recommendation score. The disaggregated user interface 560 can provide a predicted performance improvement, such as an improvement time for a logon to a hosted resource. For example, the improvement can be based on a difference from an average, or another percentile (e.g., top tenth or twenty-fifth percentile). The recommendation score can vary from the performance improvement. For example, a recommendation score for a configuration change can be relatively high for a configuration change to a login script, relative to a performance improvement, and relatively low for an increase to a number of processors or tool licenses, (e.g., based on a cost function associated with the various features).

The disaggregated user interface 560 can receive selections from a user. For example, the user can input feature selection changes. The disaggregated user interface 560 can provide a further response, relative to a change. For example, a device, such as a host device or a client device 554 can exhibit a performance loss due to the use of a disk cache. The disaggregated user interface 560 can present various features having improvement opportunity including increasing the system memory or maximum file size of a device. The user can indicate that they intend to increase system memory, whereupon the system can update the feature list to exclude file size (e.g., if file size is a not associated with performance variance in systems not utilizing a disk cache).

One or more features can be provided based on a machine learning model. For example, the model trained based on performance variance can be employed to predict a performance of a system 100 having adjusted parameters. A user can select one or more alterations such as proposed startup script changes, increases or decreases to system memory or processors, file size, number of users, or the like. In some embodiments, the predicted features can be presented based on a trend or threshold. For example, a performance target can be established (e.g., a 15 second logon time) and a the disaggregated user interface 560 can present (e.g., by a GUI, email, or other notification) responsive to a determination that the performance does not exceed the target (e.g., a time averaged performance). For example, as an organization grows, the model can retrain based on the number of employees, devices, and the like. Thus, recommended changes can change over time such that periodic or event based updates may differ. The recommended changes can include alternate implementations such as a cloud based option for reference. For example, a recommended performance change can include migrating data to a cloud instance.

The tenant data processing system 552 can include one or more network interface 562. The network interface 562 can deliver communication between the components of the tenant data processing system 552 or other devices, such as the aggregate data processing system 502. For example, the network interface 562 can interface with at least the network interface 512 of the tenant data processing system 552 over the network 550.

Any of the components of the aggregate data processing system 502 or the tenant data processing system 552 can be duplicated, such as in the corresponding system. For example, the clustering peer generator 506 or data plane 504 can be hosted by one or more components of the tenant data processing system. For example, the components can process information limited to the tenant of the tenant data processing system 552, can receive information for other tenants, such as for related entities, or can receive information, including anonymized information, from or relating to further tenants still.

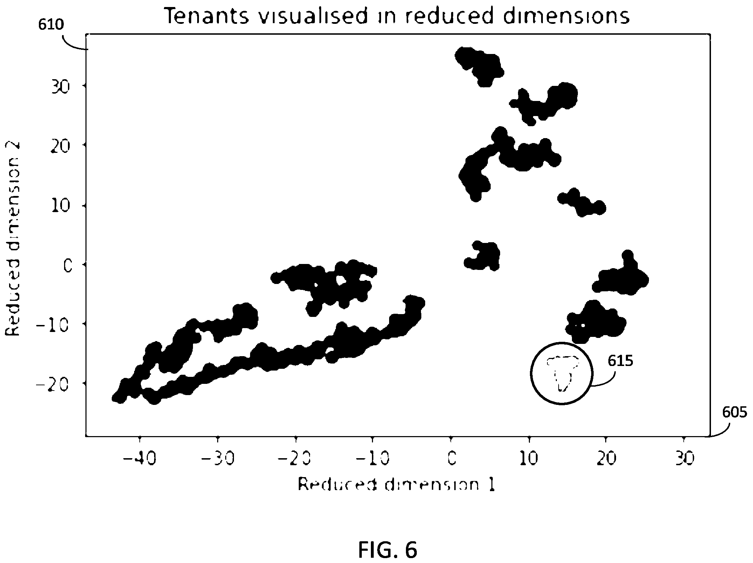

FIG. 6 is a two-dimensional representation 600 of a multi-dimensional clustering of a performance of multiple tenant data processing systems 552, in accordance with an illustrative embodiment. The two-dimensional representation 600 is selected merely to depict the clustering clearly. Various embodiments can include data planes 504 having any number of dimensions. For example, the disaggregated user interface 560 can present data planes 504 including a compressed (e.g., reduced) number of dimensions relative to a number of aggregated tenant parameters 526. A first dimension 605 can include aggregated tenant parameters 526 such as a number of employees, a number of offices, or a typical logon duration of one or more user types. The first dimensions 605 can include a number of employees and a number of offices in an "enterprise size" reduced dimension. A second dimension 610 can relate to an "enterprise lifestyle," which can be predictive of, for example, working hours or technological expectations. For example, the second dimension 610 can be include a sector (e.g., heavy manufacturing, technology, or agriculture) and a region of operation (e.g., North America, Middle East-North Africa, or California). Dimensions can be continuous (as depicted) or discrete. For example, the sector or region dimensions can be ordered according to an associational relationship (e.g., regions sharing similar working hours can be adjacent), or Cartesian distances in one or more dimensions can have a reduced weight in a clustering technique (e.g., for arbitrarily placed sectors).

The disaggregated user interface 560 can present a subset of dimensions (including reduced dimensions), to a user. For example, the disaggregated user interface 560 can receive an input to display one or more selected dimension. Responsive to the receipt of the input, the disaggregated user interface 560 can present the one or more dimensions, such as via a GUI. The GUI can include an indication of a tenant of interest (e.g., the tenant associated with the disaggregated user interface 560) and additional data points of other tenants. In some embodiments, the other tenants can be selectable, viewable, or otherwise available to via the disaggregated user interface 560 (e.g., for a user to identify their peers). In some embodiments, the peer companies can be anonymized, such that additional information is not available to other tenants, or the depiction can anonymize the plots of the peers (e.g., according to an access control method which can include inputs from each of the tenants, such as reciprocal data sharing). The disaggregated user interface 560 can present one or more clusters 615, such as clusters 615 including the tenant. A user can select clusters 615, such as by adjusting a parameters of a clustering peer generator 506 or manually, (e.g., by a GUI interaction such as a manual selection of peers, or defining a circle or sphere of a defined radius, free drawing a line or shape, or a combination thereof). Selections can be made according to one or more sets of presented dimensions. For example, a user can add and subtract peers in one or more displays, or can mark a peer in one display for selection or deselection in another presentment.

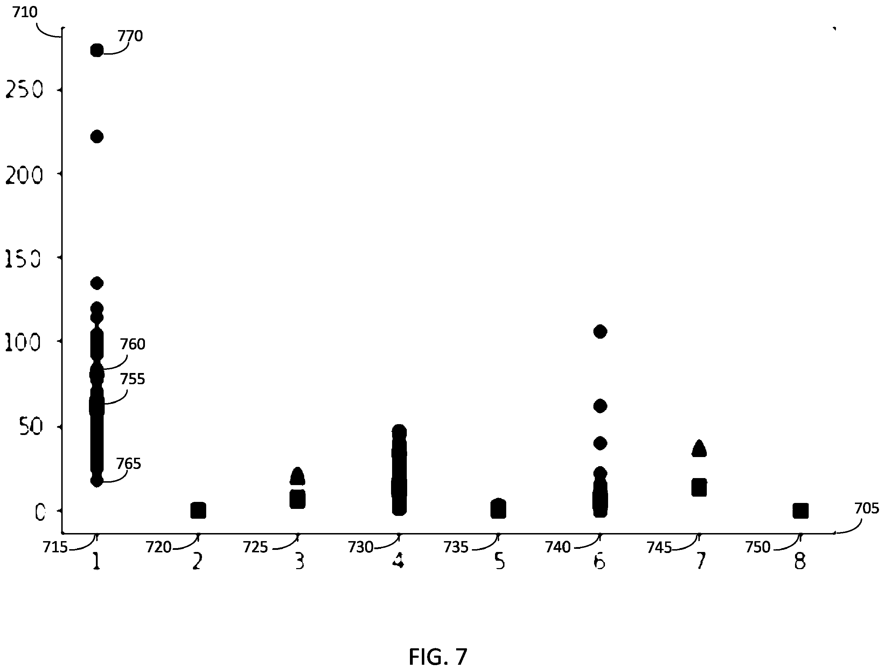

FIG. 7 is a depiction of a key performance metrics of tenants, in accordance with an illustrative embodiment. The depiction can be presented by the disaggregated user interface 560. KPI (also referred to as KPM, as discussed above) can relate to a time to logon to a resource, such as a virtual application. The x-axis 705 can be or include a histogram of a number of processes, steps, sequences, or any other action. For example, the x-axis 705 can include the operations performed by one or more action generators 556 of FIG. 1 (e.g., broker the session 715, start a platform 720, such by starting up a virtual machine, applying a policy 725 such as a global policy, execute one or more login scripts 730, 735, 740, load a profile 745, or conduct a handoff 750, such as of hardware).

The y-axis 710 can include a time to perform the process, step, sequence, or other action. For example, the y-axis 710 can describe a time to perform a constituent action of logging in to a resource hosted by either of the aggregate data processing system 502 or tenant data processing system 552. Variance in the y-axis 710 can relate to performance variance. For example, according to some embodiments, conducting a handoff 750 can be associated with little variance, which can be indicative of an optimized process or a common approach. In some embodiments, actions exhibiting low or zero variance can be omitted, or depicted with reduced prominence (e.g., smaller size, peripheral location, available for presentment in a submenu, or the like). Some actions can be combined or subdivided. For example, actions of login scripts can be divided according to a convention into a first component 730, a second component 735, and a third component 740.

For one or more actions, the depiction can include a performance of a benchmarked system 755, relative to a target performance 760. For example, the target performance can be based on a measured performance of multiple tenants or tenant data processing systems 552. A lower bound 765, upper bound 770, standard deviation, or other partition of the information of other tenants or tenant data processing systems 552 can be included. In some embodiments, specific data points can be omitted (e.g., according to a data access or interchange policy). In some embodiments, additional information can be accessible by a selection of a peer. For example, a user can select a best performing (e.g., lower bound) entity to identify a configuration thereof. The information presented can be allocated according to data access control. For example, the user might access a processor manufacturer, but be prohibited from accessing a script configuration (e.g., according to a tenant data sharing selection).

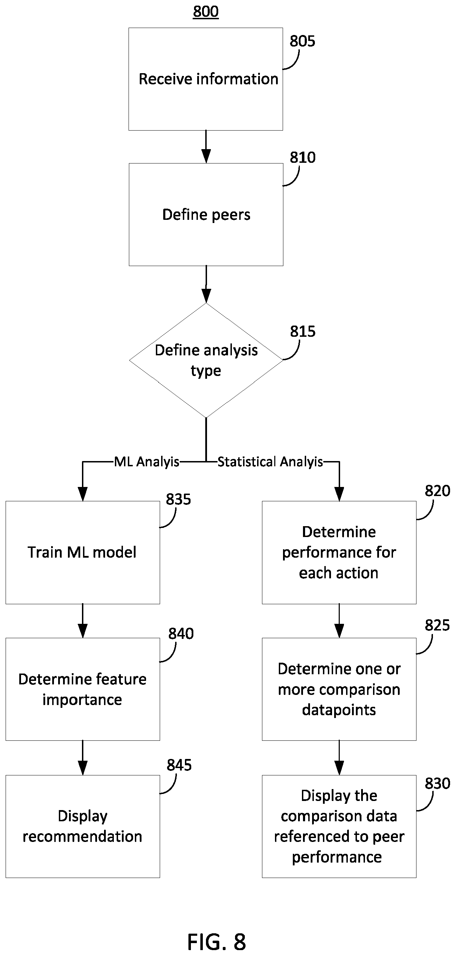

FIG. 8 is a flow diagram of a method to benchmark key performance indicators, in accordance with an illustrative embodiment. In brief summary, the method 800 includes operation 805, at which the tenant data processing system 552 can receive information for performance benchmarking. At operation 810, the tenant data processing system 552 can define a peer group for the tenant. At operation 815, the tenant data processing system 552 can define one or more analysis types. At operation 820, the tenant data processing system 552 can determine key performance metrics for one or more actions. At operation 825, the tenant data processing system 552 can determine one or more comparison data points based on the peer group. At operation 830, the tenant data processing system 552 can display the comparison data referenced to peer performance. At operation 835, the tenant data processing system 552 can train a machine learning model. At operation 840, the tenant data processing system 552 can determine an importance of one or more features. The tenant data processing system 552 can display a recommendation at operation 845.

At operation 805, the tenant data processing system 552 can receive information for performance benchmarking. For example, the tenant data processing system 552 can receive information from the aggregate data processing system 502 for a peer cluster or information from an action generator. At operation 805, the tenant data processing system 552 can receive information relating to the performance of a system. For example, the information can relate to the time to log into a hosted resource. The information can include a time for various constituent actions such as the constituent actions described herein and variations thereof. The tenant data processing system 552 can receive information relating to a memory use, CPU use, user location, or other attributes of one or more system components. For example, a pre-defined set of data can be collected by a data agent 558. In some embodiments, the information collected by the data agent 558 can be provided to an aggregate data processing system 502, such as to process the data according to one or more conventions.

At operation 810, the tenant data processing system 552 can define a peer group for the tenant. For example, the peer group can be defined by providing information associated with the tenant to the aggregate data processing system 502, by a clustering peer generator 506 of the tenant data processing system 552, or by a selection of a user, such as by a selection received by the disaggregated user interface 560. At operation 815, the tenant data processing system 552 can define one or more analysis types. For example, the tenant data processing system 552 can elect to employ a statistical model or a machine learning model. In some embodiments, both models can be employed, such as for duplicate or selective performance metrics. The selection can be based on an enterprise type, a data type or amount, a user selection, etc.

At operation 820, the tenant data processing system 552 can determine key performance metrics for one or more actions. For example, data agents 558 can gather an elapsed time for various constituent actions for logging into a hosted resource. The tenant data processing system 552 can receive a pre-defined set of operations and allocate one or more processes to each operation. For example, one or more constituent actions can include one or more subdivisions, which can occur sequentially or non-sequentially. The performance information such as the elapsed time and any system attributes such as time of day, CPU usage, memory usage, or the like can be collected.

At operation 825, the tenant data processing system 552 can determine one or more comparison data points based on the peer group. For example, for an intra-tenant comparison (e.g., a time variant comparison of login times over a 30 day period including time of day information), the tenant data processing system 552 can collect and store the data over a time period such as a rolling time period or a fixed cycle (e.g., month to date). The tenant data processing system 552 can receive information from other tenants, such as directly or through an aggregate data processing system 502. For example, the peer data can be similarly formatted or processed to reduce a set of operations required to compare the data or to anonymize the collected information. At operation 830, the tenant data processing system 552 can present the comparison data referenced to peer performance. For example, the disaggregated user interface 560 can present the tenant data along with actual peer data or derivative thereof (e.g., averages, maximums, minimums, or the like). The presentment can display data for multiple constituent actions, such as actions showing relatively large variances.

At operation 835, the tenant data processing system 552 can train a machine learning model. For example, the machine learning model can be trained with a variety of tenant systems to associate an install configuration 574 (e.g., memory available, CPU, or user location) with a performance of the system, such a time to logon to a hosted resource, or to perform a constituent action thereof, such as brokering a connection. In some embodiments, the machine learning model can predict a performance based on a contemplated change, such as a change to a user script, or a higher bandwidth available at a host or proxy thereof. In some embodiments, the tenant data processing system 552 can, at operation 840, determine an importance of one or more features. For example, the machine learning model can be an explanation model such as a SHAP model which can associate various features of a system with their constituent performance impact. In some embodiments, another model can be employed, such as a classification model to classify a performance, which can also identify a performance factor such as tenant systems which are memory bandwidth or capacity limited.

At operation 845, the tenant data processing system 552 can display a recommendation. For example, the recommendation can include a performance factor and a weight thereof. The recommendation can include a change of system hardware, configuration, or location based on the machine learning model. In some embodiments, the disaggregated user interface 560 can filter or process recommendations. For example, if a factor such as a number of client devices 554 is highly associated with performance, a tenant may be unlikely to reduce a number of terminals for an incremental gain of login performance. However, a change to a logon script, or allocating additional memory to a virtualized container can be more actionable. In various embodiments, operations of the methods 800 can be omitted, modified, substituted, or added. For example, the method can be performed by an aggregate data processing system 502.

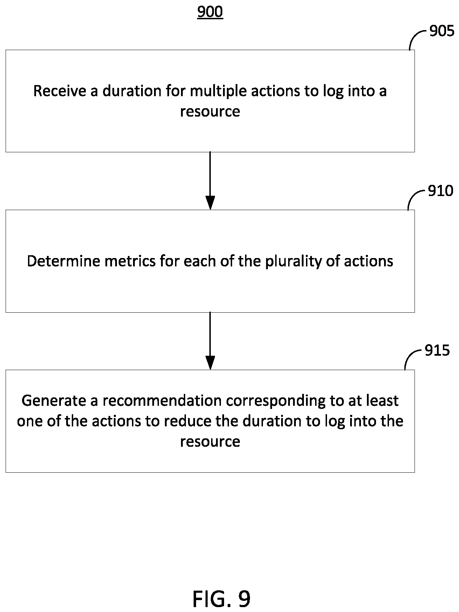

FIG. 9 is flow diagram of a method 900 to generate recommendations to improve a performance of a tenant data processing system. In brief summary, the method 900 includes operation 905, at which the tenant data processing system 552 can receive a duration for multiple actions to log into a resource. At operation 910, the tenant data processing system 552 can determine metrics for each of the plurality of actions. The tenant data processing system 552 can generate a recommendation corresponding to at least one of the actions to reduce the duration to log into the resource at operation 915.

At operation 905, the tenant data processing system 552 can receive a duration for multiple actions to log into a resource. For example, the duration can include a brokering time, a virtual machine startup time, and so on. In some embodiments, the tenant data processing system 552 can receive durations or derivatives of durations of time taken to log into a resource of another tenant (e.g., benchmarking data). For example, the benchmarking data can be received for a peer group selected according to a similarity to the tenant, such as by a clustering technique.

At operation 910, the tenant data processing system 552 can determine metrics for each of the plurality of actions. For example, the metrics can be based on a performance of the tenant data processing system 552 during other times (e.g., a performance at 3PM on a Sunday can be targeted for 9AM on a Tuesday, or having some offset therefrom). The performance can be based on a performance of another tenant. For example, a median, top tenth percentile, or other metric can be selected. In some embodiments, the peer tenant data can be presented as a metric without further processing. In some embodiments, processed derivatives of the peer tenant data (e.g., averages or percentiles) can be presented without the peer data.

At operation 915, the tenant data processing system 552 can generate a recommendation corresponding to at least one of the actions to reduce the duration to log into the resource. For example, the recommendation can be presented in the form of a discrete statement (e.g., "add more system memory") or can be presented according to a peer install configuration 574. For example, a peer tenant can be depicted having a lower time for a logon or constituent action, and the increased performance can be presented along with a correlation to increased free memory, such that the presentment of the performance information along with the peer install configuration 574 (e.g., the increased memory) can constitute a recommendation. For example, a ranked list of potential install configuration 574 changes can be presented along with predicted performance improvements associated therewith as the recommendation to perform the changes. In various embodiments, operations of the method 900, can be omitted, modified, substituted, or added. For example, the methods can be performed by an aggregate data processing system 502.

Referring to FIG. 10, a block diagram of an example system using supervised learning, is shown. Supervised learning is a method of training a machine learning model given input-output pairs. An input-output pair is an input with an associated known output (e.g., an expected output).

Machine learning model 1004 may be trained on known input-output pairs such that the machine learning model 1004 can learn how to predict known outputs given known inputs. Once the machine learning model 1004 has learned how to predict known input-output pairs, the machine learning model 1004 can operate on unknown inputs to predict an output.

The machine learning model 1004 may be trained based on general data and/or granular data (e.g., data based on a specific tenant) such that the machine learning model 1004 may be trained specific to a particular tenant. Training inputs 1002 and actual outputs 1010 may be provided to the machine learning model 1004. Training inputs 1002 may include one or more (e.g., aggregated) install configurations 574, tenant parameters 576, and the like.

The inputs 1002 and actual outputs 1004 may be trained to predict a class of a tenant, a predicted performance (e.g., responsive to a planned or contemplated change) based on the training inputs 1002 and actual outputs 1010 used to train the machine learning model 1004.

The system 500 may include one or more machine learning models 1004. In an embodiment, a first machine learning model 1004 may be trained to predict data indicative of a performance impact responsive to a change to an install configuration 574. For example, the first machine learning model 1004 may use the training inputs 1002 of install configuration parameters (e.g., available memory, processor speed, or storage latency) to predict outputs 1006 such as a logon time to a hosted resource or constituent actions such as brokering a session or logon scripts, by applying the current state of the first machine learning model 1004 to the training inputs 1002. The comparator 1008 may compare the predicted outputs 1006 to actual outputs 1010 which can be measured subsequent to any changes of a tenant, or across various tenants to determine an amount of error or differences. For example, the predicted time to broker a session (e.g., predicted output 1006) may be compared to the actual time to broker a session (e.g., actual output 1010).

In other embodiments, a second machine learning model 1004 may be trained to make one or more recommendations to the tenant based on the predicted output from the first machine learning model 1004. For example, the second machine learning model 1004 may use the training inputs 1002 such as tenant parameters 576, or install configurations 576 to predict outputs 1006 relating to a logon time to a resource or other actions, by applying the current state of the second machine learning model 1004 to the training inputs 1002. The comparator 1008 may compare the predicted outputs 1006 to actual outputs 1010 as detected by the data agents 558 to determine an amount of error or differences. The recommendation can be based on a classification or association of a tenant (e.g., according to a random forest or decision tree model). For example, the recommendation can be based on a classification of a tenants being included in a class of tenants having insufficient memory, CPU available, excessive profile or script size, or the like.

The actual outputs 1010 may be determined based on historic data of recommendations made to the tenants in conjunction with additional information such as a cost function. In an illustrative non-limiting example, a number of changes can be associated with weights according to a perceived enterprise cost. For example, an increase in client device memory may be associated with a higher or lower cost function than an increase in data center bandwidth, or virtual private network latency. A configuration change to a script can have a relatively low cost for at least some tenants. The historic information of changes to performance, such as associated tenants can also be considered. For example, if memory bandwidth is identified as associated with performance variance, but changes to memory bandwidth are not associated with performance improvements, a weight for memory bandwidth can be adjusted downwardly.

In some embodiments, a single machine leaning model 1004 may be trained to make one or more recommendations to the tenants based on current tenant data received from enterprise resources such as data agents 558. That is, a single machine leaning model may be trained using the training inputs such as tenant parameters 576 or install configurations 576 to predict outputs 1006 relating to the time taken to login to a hosted resource by applying the current state of the machine learning model 1004 to the training inputs 1002. The comparator 1008 may compare the predicted outputs 1006 to actual outputs 1010 as collected by the data agents 558 to determine an amount of error or differences. The actual outputs 1010 may be determined based on historic data associated with the recommendation to the tenants.

During training, the error (represented by error signal 1012) determined by the comparator 1008 may be used to adjust the weights in the machine learning model 1004 such that the machine learning model 1004 changes (or learns) over time. The machine learning model 1004 may be trained using a backpropagation algorithm, for instance. The backpropagation algorithm operates by propagating the error signal 1012. The error signal 1012 may be calculated each iteration (e.g., each pair of training inputs 1002 and associated actual outputs 1010), batch and/or epoch, and propagated through the algorithmic weights in the machine learning model 1004 such that the algorithmic weights adapt based on the amount of error. The error is minimized using a loss function. Non-limiting examples of loss functions may include the square error function, the root mean square error function, and/or the cross entropy error function.

The weighting coefficients of the machine learning model 1004 may be tuned to reduce the amount of error, thereby minimizing the differences between (or otherwise converging) the predicted output 1006 and the actual output 1010. The machine learning model 1004 may be trained until the error determined at the comparator 1008 is within a certain threshold (or a threshold number of batches, epochs, or iterations have been reached). The trained machine learning model 1004 and associated weighting coefficients may subsequently be stored in memory 1016 or other data repository (e.g., a database) such that the machine learning model 1004 may be employed on unknown data (e.g., not training inputs 1002). Once trained and validated, the machine learning model 1004 may be employed during a testing (or an inference phase). During testing, the machine learning model 1004 may ingest unknown data to predict future data (e.g., can predict performance based on one or more contemplated install configuration 576 changes, and the like).

Referring to FIG. 11 a block diagram of a simplified neural network model 1100 is shown. The neural network model 1100 may include a stack of distinct layers (vertically oriented) that transform a variable number of inputs 1102 being ingested by an input layer 1104, into an output 1106 at the output layer 1108.

The neural network model 1100 may include a number of hidden layers 1110 between the input layer 1104 and output layer 1108. Each hidden layer has a respective number of nodes (1112, 1114 and 1116). In the neural network model 1100, the first hidden layer 1110-1 has nodes 1112, and the second hidden layer 1110-2 has nodes 1114. The nodes 1112 and 1114 perform a particular computation and are interconnected to the nodes of adjacent layers (e.g., nodes 1112 in the first hidden layer 1110-1 are connected to nodes 1114 in a second hidden layer 1110-2, and nodes 1114 in the second hidden layer 1110-2 are connected to nodes 1116 in the output layer 1108). Each of the nodes (1112, 1114 and 1116) sum up the values from adjacent nodes and apply an activation function, allowing the neural network model 1100 to detect nonlinear patterns in the inputs 1102. Each of the nodes (1112, 1114 and 1116) are interconnected by weights 1120-1, 1120-2, 1120-3, 1120-4, 1120-5, 1120-6 (collectively referred to as weights 1120). Weights 1120 are tuned during training to adjust the strength of the node. The adjustment of the strength of the node facilitates the neural network's ability to predict an accurate output 1106.

In some embodiments, the output 1106 may be one or more numbers. For example, output 1106 may be a vector of real numbers subsequently classified by any classifier. In one example, the real numbers may be input into a softmax classifier. A softmax classifier uses a softmax function, or a normalized exponential function, to transform an input of real numbers into a normalized probability distribution over predicted output classes. For example, the softmax classifier may indicate the probability of the output being in class A, B, C, etc. As, such the softmax classifier may be employed because of the classifier's ability to classify various classes. Other classifiers may be used to make other classifications. For example, the sigmoid function, makes binary determinations about the classification of one class (i.e., the output may be classified using label A or the output may not be classified using label A).

### F. Example Embodiments for key performance metric benchmarking

The following examples pertain to further example embodiments, from which permutations and configurations will be apparent.

Example 1 includes a method. The method includes receiving, by one or more processors, for a plurality of client devices of a tenant, a duration for performing a plurality of actions to log into a resource. The method includes determining, by the one or more processors, metrics for each action of the plurality of actions. The method includes generating, by the one or more processors, one or more recommendations corresponding to at least one action of the plurality of actions, to reduce the duration to log into the resource.

Example 2 includes the subject matter of Example 1, wherein the plurality of actions comprise at least one of brokering a session to the resource, a virtual machine start-up, establishing a connection between the respective client device and the virtual machine, application of a global policy, execution of log-on scripts, loading a profile, or handoff.

Example 3 includes the subject matter of any of examples 1 or 2, wherein the plurality of client devices for the tenant comprises a first plurality of client devices for a first tenant. The method further comprises receiving, by the one or more processors, for a second plurality of clients for a plurality of second tenants, a second duration for performing the plurality of actions to log into the resource. The method further comprises clustering, by the one or more processors, the first tenant and the plurality of second tenants into a plurality of clusters according to one or more parameters of the first tenant and the plurality of second tenants. The method further comprises comparing, by the one or more processors, the metrics identified for the first tenant to metrics for each action of the plurality of actions of a subset of the plurality of second tenants, the first tenant clustered with the subset of the plurality of second tenants.

Example 4 includes the subject matter of any of examples 1 to 3, the method further comprising generating, by the one or more processors, a user interface for display on a device associated with the first tenant, the user interface including one or more graphical representations corresponding to the plurality of actions based on the comparison.

Example 5 includes the subject matter of any of examples 1 to 4, wherein generating the one or more recommendations corresponding to the at least one action is based on the comparison of the metrics for the first tenant to the metrics for each action of the subset of the plurality of second tenants.

Example 6 includes the subject matter of any of examples 1 to 5, wherein the one or more parameters comprise at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

Example 7 includes the subject matter of any of examples 1 to 6, the method further comprising applying, by the one or more processors, the metrics for each action to a machine learning model trained to generate the one or more recommendations based on training metrics and corresponding recommendations.

Example 8 includes the subject matter of any of examples 1 to 7, wherein generating the one or more recommendations is based on a comparison of an average of the metrics corresponding to the tenant for the plurality of actions over a first time period to metrics corresponding to the tenant for the plurality of actions over a second time period.

Example 9, includes the subject matter of any of examples 1 to 8, wherein receiving the duration for performing the plurality of actions to log into the resource comprises receiving, by the one or more processors, from a respective a virtual delivery agent of each client device of the plurality of client devices, the duration for performing each action of the plurality of actions to log into the resource via the virtual delivery agent.

Example 10 includes a system. The system includes one or more processors. The processors are configured to receive, for a plurality of client devices of a tenant, a duration for performing a plurality of actions to log into a resource. The processors are further configured to determine metrics for each action of the plurality of actions. The processors are further configured to generate one or more recommendations corresponding to at least one action of the plurality of actions, to reduce the duration to log into the resource.

Example 11 includes the subject matter of Example 10, wherein the plurality of actions comprise at least one of brokering a session to the resource, a virtual machine start-up, establishing a connection between the respective client device and the virtual machine, application of a global policy, execution of log-on scripts, loading a profile, or handoff.

Example 12 includes the subject matter of examples 10 or 11 wherein the plurality of client devices for the tenant comprises a first plurality of client devices for a first tenant. The one or more processors can be further configured to receive, for a second plurality of clients for a plurality of second tenants, a second duration for performing the plurality of actions to log into the resource. The one or more processors can be further configured to cluster the first tenant and the plurality of second tenants into a plurality of clusters according to one or more parameters of the first tenant and the plurality of second tenants. The one or more processors can be further configured to compare the metrics identified for the first tenant to metrics for each action of the plurality of actions of a subset of the plurality of second tenants, the first tenant clustered with the subset of the plurality of second tenants.

Example 13 includes the subject matter of any of examples 10 to 12, wherein the one or more processors are configured to generate a user interface for display on a device associated with the first tenant, the user interface including one or more graphical representations corresponding to the plurality of actions based on the comparison.

Example 14 includes the subject matter of any of examples 10 to 13, wherein generating the one or more recommendations corresponding to the at least one action is based on the comparison of the metrics for the first tenant to the metrics for each action of the subset of the plurality of second tenants.

Example 15 includes the subject matter of any of examples 10 to 14, wherein the one or more parameters comprise at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

Example 16 includes the subject matter of any of examples 10 to 15, wherein the one or more processors are configured to apply the metrics for each action to a machine learning model trained to generate the one or more recommendations based on training metrics and corresponding recommendations.

Example 17 includes the subject matter of any of examples 10 to 16, wherein generating the one or more recommendations is based on a comparison of an average of the metrics corresponding to the tenant for the plurality of actions over a first time period to metrics corresponding to the tenant for the plurality of actions over a second time period.

Example 18 includes the subject matter of any of examples 10 to 17, wherein receiving the duration for performing the plurality of actions to log into the resource comprises receiving, from a respective a virtual delivery agent of each client device of the plurality of client devices, the duration for performing each action of the plurality of actions to log into the resource via the virtual delivery agent.

Example 19 includes a non-transitory computer readable medium storing instructions that, when executed by one or more processors, cause the one or more processors to receive, for a plurality of client devices of a tenant, a duration for performing a plurality of actions to log into a resource. The computer readable medium further stores instructions that cause the one or more processors to determine metrics for each action of the plurality of actions. The computer readable medium further stores instructions that cause the one or more processors to generate one or more recommendations corresponding to at least one action of the plurality of actions, to reduce the duration to log into the resource.

Example 20 includes the subject matter of Example 19, wherein the plurality of client devices for the tenant comprises a first plurality of client devices for a first tenant, and wherein the instructions further cause the one or more processors to receive, for a second plurality of clients for a plurality of second tenants, a second duration for performing the plurality of actions to log into the resource. The instructions further cause the one or more processors to cluster the first tenant and the plurality of second tenants into a plurality of clusters according to one or more parameters of the first tenant and the plurality of second tenants. The instructions further cause the one or more processors to compare the metrics identified for the first tenant to metrics for each action of the plurality of actions of a subset of the plurality of second tenants, the first tenant clustered with the subset of the plurality of second tenants.

Various elements, which are described herein in the context of one or more embodiments, may be provided separately or in any suitable subcombination. For example, the processes described herein may be implemented in hardware, software, or a combination thereof. Further, the processes described herein are not limited to the specific embodiments described. For example, the processes described herein are not limited to the specific processing order described herein and, rather, process blocks may be re-ordered, combined, removed, or performed in parallel or in serial, as necessary, to achieve the results set forth herein.

It should be understood that the systems described above may provide multiple ones of any or each of those components and these components may be provided on either a standalone machine or, in some embodiments, on multiple machines in a distributed system. The systems and methods described above may be implemented as a method, apparatus, or article of manufacture using programming and/or engineering techniques to produce software, firmware, hardware, or any combination thereof. In addition, the systems and methods described above may be provided as one or more computer-readable programs embodied on or in one or more articles of manufacture. The term "article of manufacture" as used herein is intended to encompass code or logic accessible from and embedded in one or more computer-readable devices, firmware, programmable logic, memory devices (e.g., EEPROMs, ROMs, PROMs, RAMs, SRAMs, etc.), hardware (e.g., integrated circuit chip, Field Programmable Gate Array (FPGA), Application Specific Integrated Circuit (ASIC), etc.), electronic devices, a computer readable non-volatile storage unit (e.g., CD-ROM, USB Flash memory, hard disk drive, etc.). The article of manufacture may be accessible from a file server providing access to the computer-readable programs via a network transmission line, wireless transmission media, signals propagating through space, radio waves, infrared signals, etc. The article of manufacture may be a flash memory card or a magnetic tape. The article of manufacture includes hardware logic as well as software or programmable code embedded in a computer readable medium that is executed by a processor. In general, the computer-readable programs may be implemented in any programming language, such as LISP, PERL, C, C++, C#, PROLOG, or in any byte code language such as JAVA. The software programs may be stored on or in one or more articles of manufacture as object code.

While various embodiments of the methods and systems have been described, these embodiments are illustrative and in no way limit the scope of the described methods or systems. Those having skill in the relevant art can effect changes to form and details of the described methods and systems without departing from the broadest scope of the described methods and systems. Thus, the scope of the methods and systems described herein should not be limited by any of the illustrative embodiments and should be defined in accordance with the accompanying claims and their equivalents. References to "or" can be construed as inclusive so that any terms described using "or" can indicate any of a single, more than one, and all of the described terms. For example, a reference to "at least one of 'A' and 'B‴ can include only "A," only "B," as well as both "A" and "B." Such references used in conjunction with "comprising" or other open terminology can include additional items.

It will be further understood that various changes in the details, materials, and arrangements of the parts that have been described and illustrated herein may be made by those skilled in the art without departing from the scope of the following claims.

## Claims

1. A method comprising:
receiving, by one or more processors, for a plurality of client devices of a tenant, a duration for performing a plurality of actions to log into a resource;
determining, by the one or more processors, metrics for each action of the plurality of actions; and
generating, by the one or more processors, one or more recommendations corresponding to at least one action of the plurality of actions, to reduce the duration to log into the resource.

2. The method of claim 1, wherein the plurality of actions comprise at least one of brokering a session to the resource, a virtual machine start-up, establishing a connection between the respective client device and the virtual machine, application of a global policy, execution of log-on scripts, loading a profile, or handoff.

3. The method of claim 1, wherein the plurality of client devices for the tenant comprises a first plurality of client devices for a first tenant, the method further comprising:
receiving, by the one or more processors, for a second plurality of clients for a plurality of second tenants, a second duration for performing the plurality of actions to log into the resource;
clustering, by the one or more processors, the first tenant and the plurality of second tenants into a plurality of clusters according to one or more parameters of the first tenant and the plurality of second tenants; and
comparing, by the one or more processors, the metrics identified for the first tenant to metrics for each action of the plurality of actions of a subset of the plurality of second tenants, the first tenant clustered with the subset of the plurality of second tenants.

4. The method of claim 3, further comprising:
generating, by the one or more processors, a user interface for display on a device associated with the first tenant, the user interface including one or more graphical representations corresponding to the plurality of actions based on the comparison.

5. The method of claim 3, wherein generating the one or more recommendations corresponding to the at least one action is based on the comparison of the metrics for the first tenant to the metrics for each action of the subset of the plurality of second tenants.

6. The method of claim 3, wherein the one or more parameters comprise at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

7. The method of claim 1, further comprising:
applying, by the one or more processors, the metrics for each action to a machine learning model trained to generate the one or more recommendations based on training metrics and corresponding recommendations.

8. The method of claim 1, wherein generating the one or more recommendations is based on a comparison of an average of the metrics corresponding to the tenant for the plurality of actions over a first time period to metrics corresponding to the tenant for the plurality of actions over a second time period.

9. The method of claim 1, wherein receiving the duration for performing the plurality of actions to log into the resource comprises receiving, by the one or more processors, from a respective a virtual delivery agent of each client device of the plurality of client devices, the duration for performing each action of the plurality of actions to log into the resource via the virtual delivery agent.

10. A system comprising:
one or more processors configured to:
receive, for a plurality of client devices of a tenant, a duration for performing a plurality of actions to log into a resource;
determine metrics for each action of the plurality of actions; and
generate one or more recommendations corresponding to at least one action of the plurality of actions, to reduce the duration to log into the resource.

11. The system of claim 10, wherein the plurality of actions comprise at least one of brokering a session to the resource, a virtual machine start-up, establishing a connection between the respective client device and the virtual machine, application of a global policy, execution of log-on scripts, loading a profile, or handoff.

12. The system of claim 10, wherein the plurality of client devices for the tenant comprises a first plurality of client devices for a first tenant, and wherein the one or more processors are configured to:
receive, for a second plurality of clients for a plurality of second tenants, a second duration for performing the plurality of actions to log into the resource;
cluster the first tenant and the plurality of second tenants into a plurality of clusters according to one or more parameters of the first tenant and the plurality of second tenants; and
compare the metrics identified for the first tenant to metrics for each action of the plurality of actions of a subset of the plurality of second tenants, the first tenant clustered with the subset of the plurality of second tenants.

13. The system of claim 12, wherein the one or more processors are configured to:
generate a user interface for display on a device associated with the first tenant, the user interface including one or more graphical representations corresponding to the plurality of actions based on the comparison.

14. The system of claim 12, wherein generating the one or more recommendations corresponding to the at least one action is based on the comparison of the metrics for the first tenant to the metrics for each action of the subset of the plurality of second tenants; and
wherein the one or more parameters comprise at least one of a tenant domain, a number of users per tenant, a number of applications, an average number of users per a time period, an average specification and usage of a virtual delivery agent, an average number of sessions per the time period, a number of virtual delivery agents, a number of users, or an average number of applications used per the time period.

15. The system of claim 12, wherein generating the one or more recommendations is based on a comparison of an average of the metrics corresponding to the tenant for the plurality of actions over a first time period to metrics corresponding to the tenant for the plurality of actions over a second time period; and
wherein receiving the duration for performing the plurality of actions to log into the resource comprises receiving, from a respective a virtual delivery agent of each client device of the plurality of client devices, the duration for performing each action of the plurality of actions to log into the resource via the virtual delivery agent.
